(19) Europäisches Patentamt
European Patent Office
Office européen des brevets

(11) Publication number: **0 059 615 B1**

# (12) EUROPEAN PATENT SPECIFICATION

(45) Date of publication of patent specification: **20.11.86**

(51) Int. Cl.[4]: **C 08 K 5/00,** C 08 L 101/04, C 08 L 27/06

(21) Application number: **82300981.6**

(22) Date of filing: **25.02.82**

## (54) Polymer stabilising compositions, polymers stabilised therewith, shaped articles formed from such polymers and a process for polymer stabilisation.

(30) Priority: **26.02.81 US 238299**
**04.02.82 US 345821**

(43) Date of publication of application:
**08.09.82 Bulletin 82/36**

(45) Publication of the grant of the patent:
**20.11.86 Bulletin 86/47**

(84) Designated Contracting States:
**AT BE CH DE FR GB IT LI NL SE**

(56) References cited:
**EP-A-0 059 614**
**GB-A-1 349 913**
**US-A-3 715 333**

(73) Proprietor: **MORTON THIOKOL, INC.**
**110 North Wacker Drive**
**Chicago Illinois 60606 (US)**

(72) Inventor: **Kugele, Thomas G.**
**6026 Colter Avenue**
**Cincinnati Ohio 45230 (US)**
Inventor: **Mesch, Keith A.**
**2147 Broadhurst Avenue**
**Cincinnati Ohio 45240 (US)**
Inventor: **Wursthorn, Karl R.**
**1928 Creswell Drive**
**Cincinnati Ohio 45240 (US)**

(74) Representative: **Warren, Anthony Robert et al**
**BARON & WARREN 18 South End Kensington**
**London W8 5BU (GB)**

**EP 0 059 615 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to stabilizer compositions containing an organotin compound or mixture of organotin compounds, a mercaptan-containing organic compound or mixture of mercaptan-containing organic compounds, and, optionally, a halogen-containing tin compound or mixture of halogen-containing tin compounds. This invention also relates to polymer compositions containing said stabilizer compositions, to methods for stabilizing polymers by adding thereto said stabilizer compositions and to articles of manufacture, e.g. pipe, made from polymers stabilized with said stabilizer compositions.

Organotin compounds, particularly useful as stabilizers for halogen containing polymers, are well known in the art. These organotin compounds can provide stabilisation of such polymers when used alone or in admixture with various compounds. For example U.S. Patent No. 3,715,333 to W. A. Larkin discloses stabilizers for halogen-containing polymers which contain, as a first stabilizer, an organotin halide having the formula:

$$RSnX_3$$

where R is a hydrocarbon and X is chlorine, bromine, or iodine; and, as a second stabilizer, a sulfur-containing organotin compound exhibiting two direct carbon to tin bonds and a direct bond from tin to each of two sulfur atoms. Likewise, U.S. Patent No. 3,503,924 to M.W. Pollock discloses stabilizers for polyvinyl chloride resins which are mixtures containing a diorganotin mercaptide and a minor amount of an alpha-mercapto acid. Pollock also discloses, in U.S. Patent No. 3,507,827, stabilizer mixtures for decreasing early discoloration of polyvinyl chloride resins which contain (1) a dialkyl, dicycloalkyl or alkylcycloalkyl tin mercapto carboxylic acid ester, and (2) an alpha- or beta-mercapto acid having at least three carbon atoms, or an alpha- or beta-mercapto alcohol having at least two carbon atoms.

In accordance with this invention there are provided compositions for stabilizing halogen-containing organic polymers which comprise an organotin compound or mixture of organotin compounds, a mercaptan-containing organic compound or mixture of mercaptan-containing organic compounds, and, optionally, a halogen-containing tin compound or mixture of halogen-containing tin compounds. The invention is also directed to polymer compositions containing a stabilizing composition comprising an organotin compound or mixture of organotin compounds, a mercaptan-containing organic compound or mixture of mercaptan-containing organic compounds, and, optionally, a halogen-containing tin compound or mixture of halogen-containing tin compounds; to a process for stabilizing polymers by adding thereto a stabilizing composition comprising an organotin compound or mixture of organotin compounds, a mercaptan-containing organic compound or mixture of mercaptan containing organic compounds, and, optionally, a halogen-containing tin compound or mixture of halogen-containing tin compounds; and to articles of manufacture, e.g. pipe, made from polymers stabilized with a stabilizing composition comprising an organotin compound or mixture of organotin compounds, a mercaptan-containing organic compound or mixture of mercaptan-containing compounds, and, optionally, a halogen-containing tin compound or mixture of halogen-containing tin compounds.

The stabilizer compositions of this invention have quite unexpectedly been found to impart stabilization against the deteriorative effects of heat to halogen-containing organic polymers which is superior to those stabilizer compositions previously known in the art.

The term halogen-containing organic polymers as used herein refers to halogen-containing vinyl and vinylidene polymers or resins in which the halogen is attached directly to the carbon atoms. Preferably, the polymer is a vinyl halide polymer, more particularly a vinyl chloride polymer. Usually, the vinyl chloride polymer is made from monomers consisting of vinyl chloride alone or a mixture of monomers comprising, preferably, at least about 70% by weight based on the total monomer weight of vinyl chloride.

The halogen-containing polymers which can be stabilized according to this invention include chlorinated polyethylene having 14 to 75%, e.g. 27%, chloride by weight, chlorinated natural and synthetic rubber, rubber hydrochloride, chlorinated polystyrene, chlorinated polyvinyl chloride, polyvinyl bromide, polyvinyl fluoride, copolymers of vinyl chloride with 1 to 90%, preferably 1 to 30%, of a copolymerizable ethylenically unsaturated material such as, for example, vinyl acetate, vinyl butyrate, vinyl benzoate, vinylidene chloride, diethyl fumarate, diethyl maleate, other alkyl fumarates and maleates, vinyl propionate, methyl acrylate, 2-ethylhexyl acrylate, butyl acrylate and other alkyl acrylates, methyl methacrylate, ethyl methacrylate, butyl methacrylate and other alkyl methacrylates, methyl alpha-chloroacrylate, styrene, trichloroethylene, vinyl ethers such as vinyl ethyl ether, vinyl chloroethyl ether and vinyl phenyl ether, vinyl ketones such as vinyl methyl ketone and vinyl phenyl ketone, 1-fluoro-2-chloroethylene, acrylonitrile, chloroacrylonitrile, allylidene diacetate and chloroallylidene diacetate. Typical copolymers include vinyl chloride-vinyl acetate (96:4 sold commercially as VYNW), a vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), and vinyl chloride-2-ethylhexyl acrylate (80:20). In addition to the stabilizer compositions of this invention, there can also be incorporated into the halogen-containing organic polymer conventional additives such as plasticizers, pigments, fillers, dyes, ultraviolet light absorbing agents, densifying agents and the like.

The stabilizer compositions of this invention comprise 40 to 90 wt.% of an organotin compound or

mixture of organotin compounds, 10 to 60 wt.% of a mercaptan-containing organic compound or mixture of mercaptan-containing organic compounds, and, optionally, up to 33 wt.% of a halogen-containing tin compound or mixture of halogen-containing tin compounds. The organotin compounds useful in this invention contain one or more tetravalent tin atoms which each have at least one direct tin to carbon bond and have structures selected from the following formulae:

(I) 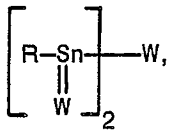

(II) 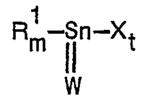

(IIa) 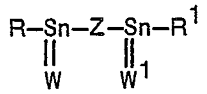

(III) 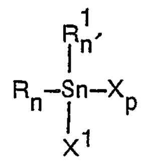

(IV) 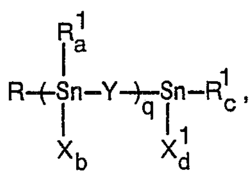 and

(V) 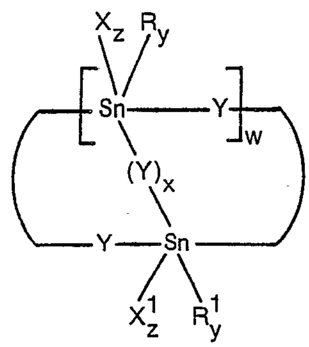

wherein X and $X^1$ are the same of different and are selected from —$SR^2$, Cl, Br, I,

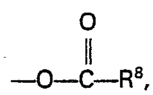

and O—$R^8$ with the proviso that in formula (III) one of X and $X^1$ is —$SR^2$ and the other is —$SR^2$ or

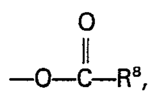

and that in formula (II) when t = 1, in formula (V) when z = 1 and in formula (IV) at least one X or $X^1$ is —$SR^2$;

Y is 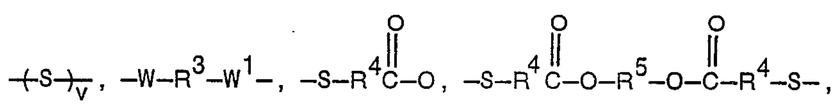

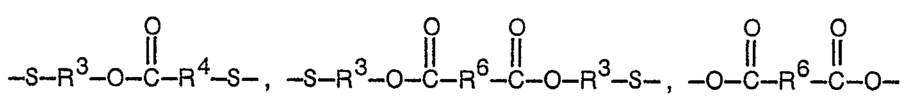

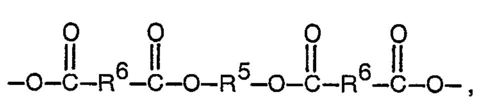 or 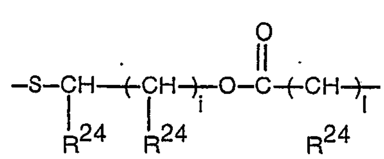

Z is 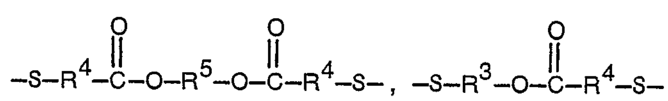

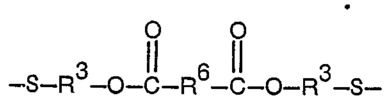

W and $W^1$ are the same or different and are oxygen or sulfur;

R and $R^1$ are the same or different and are selected from alkyl, aryl, alkenyl, aralkyl, alkaryl, cycloalkyl, cycloalkenyl,

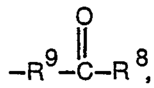, 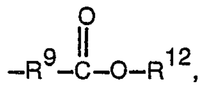, 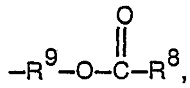, 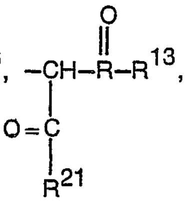,

$-R^9-O-R^{12}$, and $-R^9-CN$;

$R^2$ is alkyl, alkenyl aryl, aralkyl, cycloakyl, cycloalkenyl,

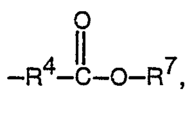, 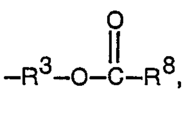, 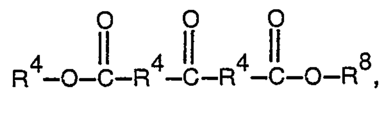, 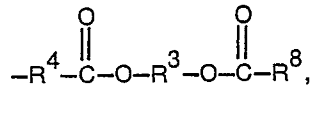,

$-R^3-S-R^7$, or $R^3-O-R^8$ ;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is $-H$ or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is $-H$ or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

$R^{24}$ is

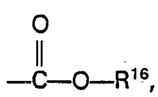, 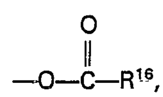,

$-OH$, $-SH$, aryl, $C_1$ to $C_{18}$ alkyl or $-H$;

$R^{16}$ is $-H$ or $R^8$;

i = 0 or an integer from 1 to 6 inclusive;

m = 1 or 2 and t = 0 or 1 with the proviso that m + t = 2;

n = 0, 1 or 2, n' = 0, 1 or 2 and p = 1 or 2 with the proviso that n + n' = 1 or 2 and n + n' + p = 3;

a = 0, 1 or 2, b = 0, 1 or 2, q = an integer from 1 to 5 inclusive c = 1, 2 or 3 and d = 0, 1 or 2 with the proviso that a + b = 2 and c + d = 3;

v = an integer from 1 to 8 inclusive; and

w = 0, 1 or 2, x = 0 or 1, y = 1 or 2, z = 0 or 1 with the proviso that when x = 0 and w = 1 or 2 then y = 1 and z = 1, when x = 1, then y = 1, z = 0 and w = 1, when w = 2 then x = 0, y = 1 and z = 1 and when w = 0 then x = 0, y = 1, z = 1 and Y is $-W-R^3-W^1-$ or

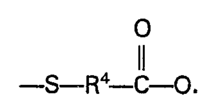.

As used herein the term alkyl represents monoavalent straight or branched chain hydrocarbon radicals containing, for example, 1 to 20 carbon atoms. The term aryl refers to monovalent $C_6$—$C_{10}$ aromatic rings such as benzene and naphthalene. The term alkenyl refers to monovalent straight or branched chain $C_2$ to $C_{20}$ hydrocarbon radicals containing at least one double bond. The term aralkyl represents a monovalent $C_1$ to $C_{20}$ hydrocarbon radical having attached thereto an aryl radical. The term alkaryl refers to monovalent aryl radicals having attached thereto at least one $C_1$—$C_{20}$ alkyl radical. The term cycloalkyl represents monovalent $C_3$—$C_8$ saturated cycloaliphatic radicals, and the term cylcoalkenyl represents $C_5$—$C_8$ cycloaliphatic radicals containing at least one double bond.

The organotin compounds useful in this invention are prepared by methods well known in the art. For example, methods of preparing these organotin compounds are disclosed in U.S. Patents 3,565,930, 3,869,487, 3,979,359, 4,118,371, 4,134,878 and 4,183,846.

The preferred organotin compounds useful in this invention are those compounds according to formula (I) where R is methyl, butyl or octyl and W is sulfur; those compounds according to formula (II) where $R^1$ is methyl or butyl, W is sulfur, X is $-SR^2$ where $R^2$ is

$$R^3O\overset{O}{\overset{\|}{C}}R^8,$$

m = 1 and t = 1; those compounds according to formula (IIa) where R and $R^1$ are methyl, butyl, octyl or

$$-R^9-\overset{O}{\overset{\|}{C}}-O-R^{12};$$

W and $W^1$ are oxygen or sulfur; and Z is

$$-S-R^3-O-\overset{O}{\overset{\|}{C}}-R^6-\overset{O}{\overset{\|}{C}}-O-R^3-S-,\ -S-R^3-O-\overset{O}{\overset{\|}{C}}-R^4-S-\ \text{or}\ -S-R^4-\overset{O}{\overset{\|}{C}}-O-R^5-O-\overset{O}{\overset{\|}{C}}-R^4-S-;$$

those compounds according to formula (III) where R is methyl or butyl, $R^1$ is methyl or butyl, X is $-SR^2$ where $R^2$ is

$$-R^3O\overset{O}{\overset{\|}{C}}R^8,$$

$X^1$ is $-SR^2$ where $R^2$ is

$$-R^3O\overset{O}{\overset{\|}{C}}R^8,$$

n = 0 or 1, n′ = 0 or 1, n + n′ = 1 and p = 2; those compounds according to formula (IV) where R is methyl, X is $-SR^2$ where $R^2$ is

$$-R^3O\overset{O}{\overset{\|}{C}}R^8,$$

$R^1$ is methyl, $X^1$ is $-SR^2$ where $R^2$ is

$$-R^3O\overset{O}{\overset{\|}{C}}R^8,$$

Y is —S—, a = 0, b = 2, c = 1, d = 2 and q = 1; and those compounds according to formula (V) where R is methyl, $R^1$ is methyl, Y is —S—, w = 1, x = 1, y = 1 and z = 0.

Examples of organotin compounds which are useful in this invention include, but are not limited to those illustrated in Tables I—IV below. Thus, representative of the organotin compounds described by formulas (I) and (II) are those illustrated in Table I below.

Representative of the organotin compounds described by formula (IIa) are those illustrated in Table Ia below.

Examples of the organotin compounds represented by formula (III) are illustrated in Table II below.

The organotin compounds illustrated in Table III below are representative of compounds described by formula (IV).

The organotin compound illustrated in Table IV below is representative of compounds described by formula (V).

TABLE I

(I) 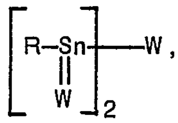

(II) 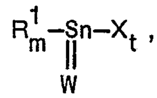

| Organotin Compound No. | R | $R^1$ | W | X | m | t |
|---|---|---|---|---|---|---|
| 1 | $-C_4H_9$ | – | S | – | – | – |
| 2 | $-C_8H_{17}$ | – | O | – | – | – |
| 3 | – | $-CH_3$ | S | 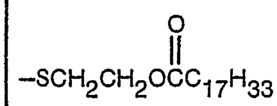 | 1 | 1 |
| 4 | – | $-CH_3$ | S | 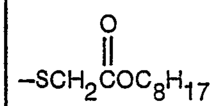 | 1 | 1 |
| 5 | – | 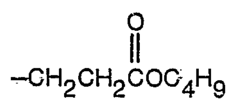 | S | 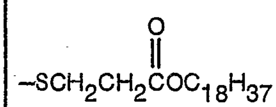 | 1 | 1 |
| 6 | – | $-C_4H_9$ | S | – | 2 | 0 |
| 7 | – | $-C_8H_{17}$ | O | – | 2 | 0 |

TABLE Ia

(IIa) 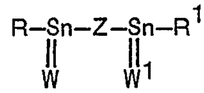

| Organotin Compound No. | R and $R^1$ | W | $W^1$ | Z |
|---|---|---|---|---|
| 7a | $-CH_3$ | S | S | 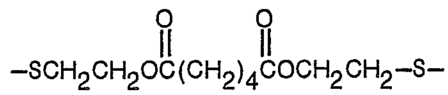 |
| 7b | $-C_4H_9$ | S | S | 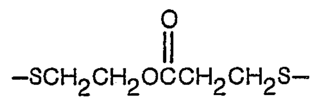 |
| 7c | $-C_8H_{17}$ | O | S | 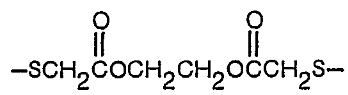 |
| 7d | 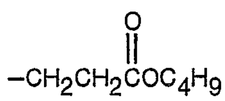 | S | S | 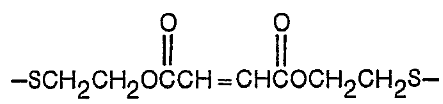 |
| 7e | $-CH_3$ | S | S | 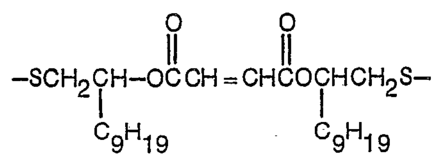 |
| 7f | $-C_4H_9$ | S | S | 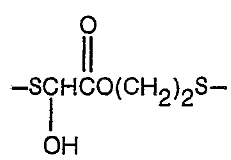 |
| 7g | $-C_4H_9$ | O | O | 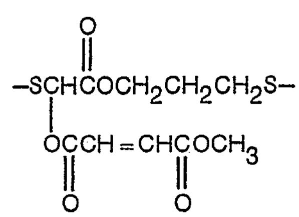 |
| 7h | $-CH_3$ | S | S | 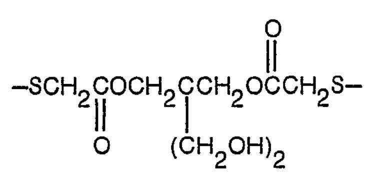 |
| 7i | $-CH_3$ | S | S | 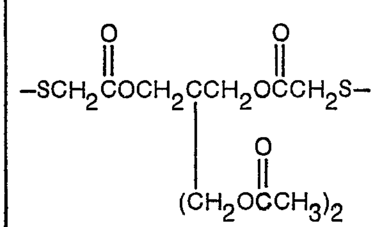 |

TABLE II

(III) 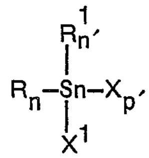

| Organotin Compound No. | R and $R^1$ | X and $X^1$ | n | n′ | p |
|---|---|---|---|---|---|
| 8 | $-CH_3$ | 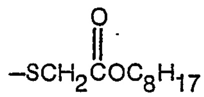 | 1 | 0 | 2 |
| 9 | $-C_4H_9$ | 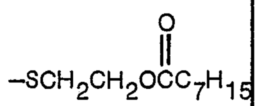 | 1 | 0 | 2 |
| 10 | 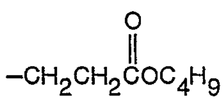 | 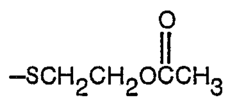 | 2 | 0 | 1 |
| 11 | $-CH_3$ | 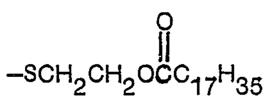 | 2 | 0 | 1 |

TABLE III

(IV) 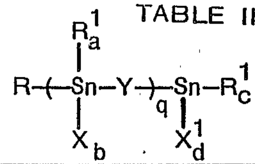

| Organotin Compound No. | R and $R^1$ | X | $X^1$ | Y | a | b | c | d | q |
|---|---|---|---|---|---|---|---|---|---|
| 12 | $-CH_3$ | $-SCH_2CH_2O\overset{\overset{O}{\|}}{C}C_{11}H_{23}$ | Same as X | $-S-$ | 0 | 2 | 1 | 2 | 1 |
| 13 | $-C_8H_{17}$ | $-SCH_2\overset{\overset{O}{\|}}{C}OC_{13}H_{27}$ | do | $-S-$ | 1 | 1 | 2 | 1 | 1 |
| 14 | $-C_4H_9$ | $-SCH_2CH_2O\overset{\overset{O}{\|}}{C}C_8H_{17}$ | do | $-SCH_2CH_2\overset{\overset{O}{\|}}{C}O-$ | 1 | 1 | 2 | 1 | 1 |
| 15 | $-CH_2CH_2\overset{\overset{O}{\|}}{C}OC_4H_9$ | $-SCH_2CH_2\overset{\overset{O}{\|}}{C}OC_8H_{17}$ | do | $-S-S-$ | 0 | 2 | 1 | 2 | 1 |
| 16 | $-CH_3$ | $-SCH_2CH_2O\overset{\overset{O}{\|}}{C}C_{17}H_{33}$ | do | $-SCH_2\overset{\overset{O}{\|}}{C}OC_4H_8O\overset{\overset{O}{\|}}{C}CH_2S-$ | 0 | 2 | 1 | 2 | 2 |
| 17 | $-CH_3$ | $-SCH_2CH_2O\overset{\overset{O}{\|}}{C}CH=CH\overset{\overset{O}{\|}}{C}OCH_3$ | do | $-S-$ | 0 | 2 | 1 | 2 | 1 |
| 18 | $-C_4H_9$ | $-SCH_2CH_2O\overset{\overset{O}{\|}}{C}C_{17}H_{33}$ | Cl | $-S-$ | 1 | 1 | 2 | 1 | 1 |
| 19 | $-C_4H_9$ | $-SCH_2CH_2O\overset{\overset{O}{\|}}{C}C_8H_{17}$ | Same as X | $-S-CH_2\overset{\overset{O}{\|}}{C}O-$ | 0 | 2 | 1 | 2 | 1 |
| 20 | $-CH_3$ | $-SCH_2CH_2O\overset{\overset{O}{\|}}{C}C_{11}H_{23}$ | do | $-S-$ | 0 | 2 | 1 | 2 | 1 |
| 21 | $-C_4H_9$ | $-SCH_2CH_2O\overset{\overset{O}{\|}}{C}C_7H_{15}$ | do | 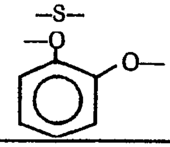 | 0 | 2 | 1 | 2 | 1 |

TABLE IV

(V) 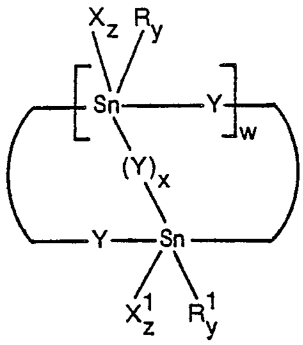

| Organotin Compound No. | R and $R^1$ | X and $X^1$ | Y | w | x | y | z |
|---|---|---|---|---|---|---|---|
| 22 | $-CH_3$ | – | 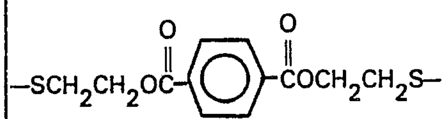 | 1 | 1 | 1 | 0 |

As used in Tables I—III above, and throughout this specification, the radicals $-C_4H_9$, $-C_8H_{17}$, $-C_{12}H_{25}$, $-C_9H_{19}$ and $-C_{10}H_{21}$ represent n-butyl, n-octyl, n-dodecyl, n-nonyl and n-decyl respectively.

The carboxyl radicals

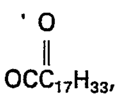, 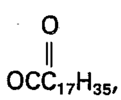, 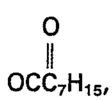, 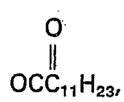, and 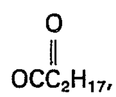,

are derived from oleic acid, stearic acid, n-octanoic acid, lauric acid, and pelargonic acid respectively. Likewise, the radicals $-OC_{13}H_{27}$, $-OC_{18}H_{37}$, and $-OC_8H_{17}$ are derived from tridecanol, stearyl alcohol and iso-octanol respetively.

The mercaptan-containing organic compounds useful in this invention include hydrocarbyl mercaptans, mercapto esters, mercapto alcohols, and mercapto acids. These mercaptan-containing organic compounds have structures illustrated by the following formulas:

(VI) 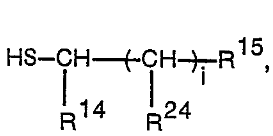,

(VII) 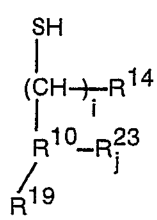

(VIII) 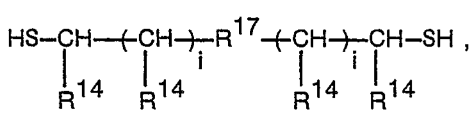,

(IX) 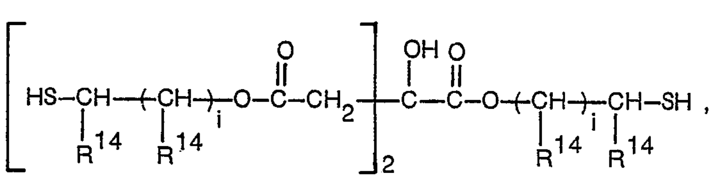,

(X) 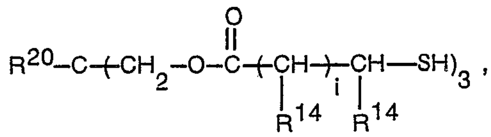 , and

(XI) 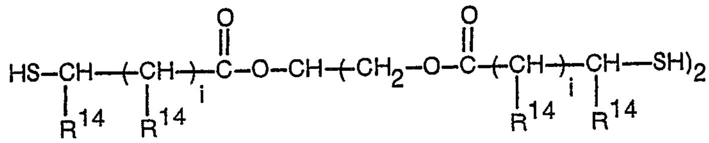 where

(XIa) 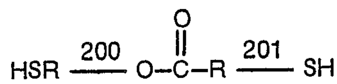

where

$R^{10}$ is cycloalkyl, cycloalkenyl or phenyl;

$R^{14}$ is H, aryl or $C_1$ to $C_{18}$ alkyl;

$R^{24}$ is as previously defined;

$R^{17}$ is

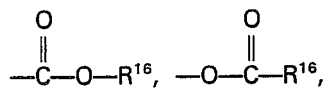

—OH, —SH, aryl, $C_1$ to $C_{18}$ alkyl, or —H;

$R^{16}$ is as previously defined;

$R^{10}$ is

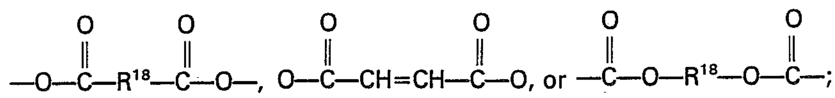

$R^{18}$ is arylene, $C_1$ to $C_8$ alkylene, or

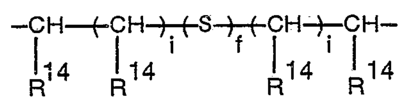 ;

$R^{19}$ is —H or a divalent group which may contain halogen, hydroxy, mercapto or alkyl substituents and which combines with $R^{10}$ when $R^{10}$ is phenyl to form a naphthalene ring;

$R^{20}$ is $-CH_3$, $-CH_2-CH_3$, or 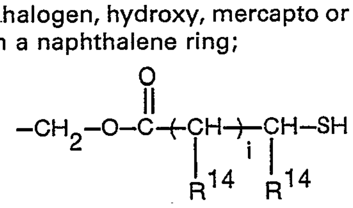 ;

$R^{23}$ is 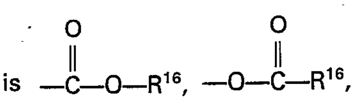

—SH, aryl, $C_1$ to $C_{18}$ alkyl, —OH or —H; with the proviso that in formula (VII) when $R^{10}$ is phenyl, $R^{23}$ is —OH and i = 0, then the —OH and —SH groups are on non-adjacent carbon atoms;

$R^{200}$ and $R^{201}$ are the same or different and are alkylene, alkenylene, arylene, cycloalkylene or cycloalkenylene; or alkylene, alkenylene, arylene, cycloalkylene or cycloalkenylene each substituted with one or two —R, —$OR^7$,

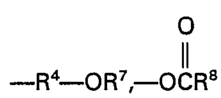 or 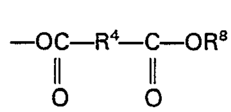 groups;

R, $R^4$, $R^7$ and $R^8$ are as previously defined;

i is as previously defined;

j = 0, 1, 2 or 3; and

f = 1 or 2.

The mercaptan-containing organic compounds useful in this invention are well known compounds (see, for example, U.S. Patents No. 3,503,924 and 3,507,827).

The preferred mercaptan-containing organic compounds useful in this invention are those compounds according to formula (VI) where $R^{14}$ is —H, $R^{24}$ is —H, $R^{15}$ is

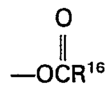

and i = 1; those compounds according to formula (VII) where $R^{10}$ is phenyl, $R^{14}$ is —H, $R^{23}$ is —H, $R^{19}$ is —H, i = 1 and j = 1; those compounds according to formula (VIII) where $R^{14}$ is —H, $R^{17}$ is

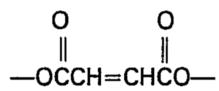

and i = 1; those compounds according to formula (IX) where $R^{14}$ is —H and i = 1; those compounds according to formula (X) where $R^{20}$ is $-C_2H_5$ or

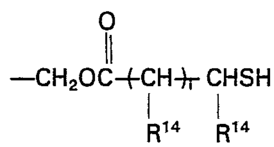

$R^{14}$ is —H and i = 1; and those compounds according to formula (XI) where $R^{14}$ is —H and i = 1; and those compounds according to formula (XIa) where $R^{200}$ is $-CH_2CH_2-$ or

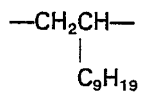 , and $R^{201}$ is $-CH_2$ or 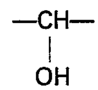 .

Of the foregoing, the mercaptan-containing organic compounds according to formula (VI) are more preferred.

Examples of the mercaptan-containing organic compounds described by formula (VI) include, but are not limited to, the following compounds:

$HSC_{12}H_{25}$

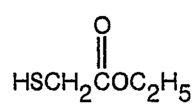

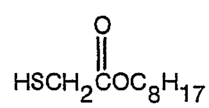

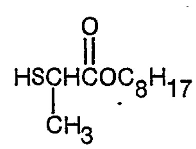

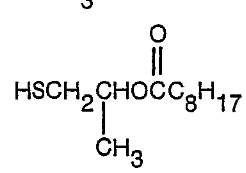

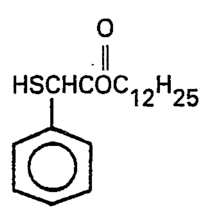

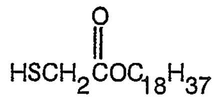

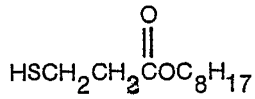

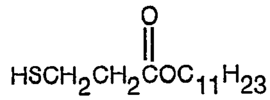

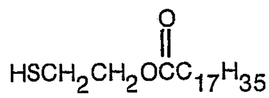

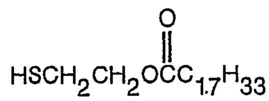

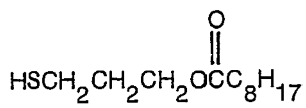

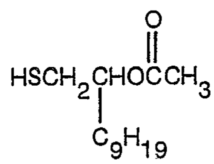

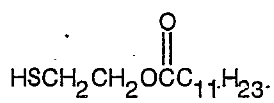

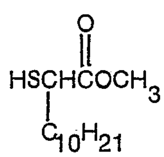

$HSCH_2CH_2OH$

$HSCH_2CH_2CH_2OH$

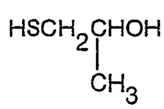

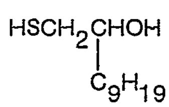

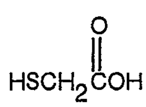

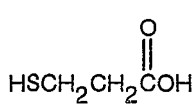

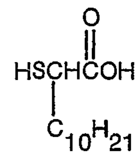

Examples of the mercaptan-containing organic compounds described by formula (VII) include, but are not limited to, the following compounds:

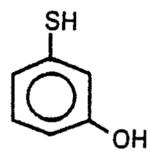

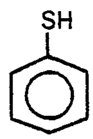

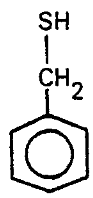

Examples of mercaptan-containing organic compounds represented by formula (VIII) include, but are not limited to, the following compounds:

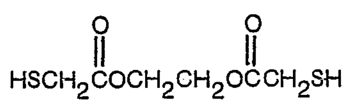

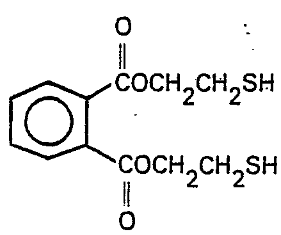

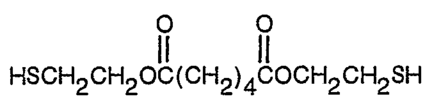

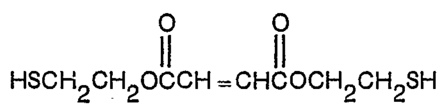

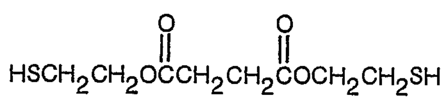

An example of the mercaptan-containing organic compounds described by formula (IX) includes, but is not limited to, the following:

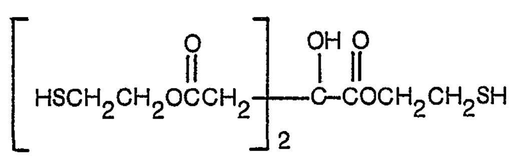

The mercaptan-containing organic compounds represented by formula (X) are exemplified by, but are not limited to, the following:

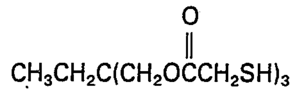

The mercaptan-containing organic compounds represented by formula (XI) are exemplified by, but are not limited to, the following:

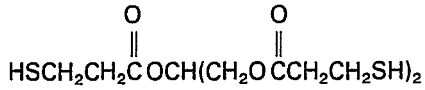

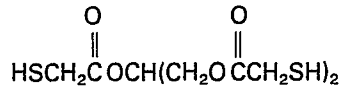

The mercaptan-containing organic compounds represented by formula (XIa) are exemplified by, but are not limited to, the following:

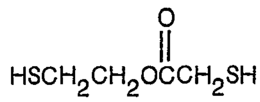

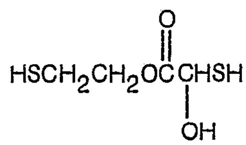

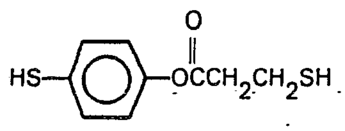

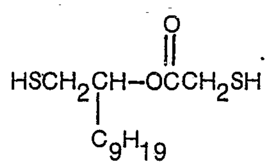

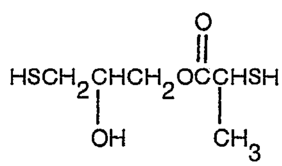

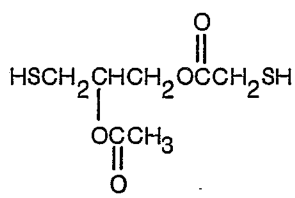

The halogen-containing tin compounds (C) useful in this invention contain a tetravalent tin atom having bonded directly thereto at least one halogen atom, and are selected from compounds having the formula:

(XII) 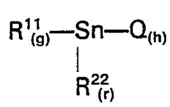

where

Q is Cl, Br, or I;

$R^{11}$ and $R^{22}$ are the same or different and are selected from —R, $R^1$,

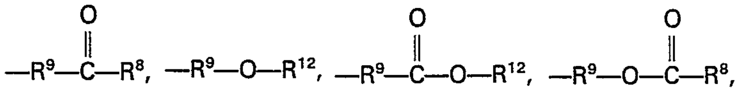

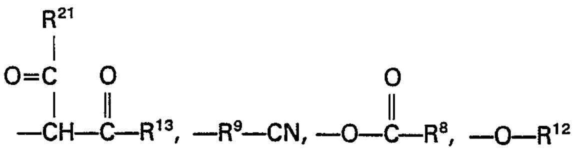

where R, $R^1$, $R^8$, $R^9$, $R^{12}$, $R^{13}$ and $R^{21}$ are as previously defined; and
g = 0, 1, 2 or 3, r = 0, 1, 2, or 3 and h = 1, 2, 3 or 4 with the proviso that g + r + h = 4.

The composition of the invention contains at least 0.1 wt%, based on the total composition of halogen in compounds of groups (A) and/or (C) above. If no halogen containing tin compound (C) is present, at least one compound (A) must be selected from compounds of formulae (II), (IV) and (V) wherein at least one of X or X' is Cl. Br or I.

The preferred halogen-containing tin compounds (C) useful in this invention are those compounds according to formula (XII) where $R^{11}$ is methyl, $R^{22}$ is —Cl, Q is Cl, g = 1, h = 2 and r = 1.

Examples of halogen-containing tin compounds which are useful in this invention include, but are not limited to, the compounds illustrated below.

$CH_3SnCl_3$

$(CH_3)_2SnCl_2$

$C_4H_9SnCl_3$

$C_8H_{17}SnCl_3$

$SnCl_4$

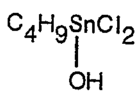

$(C_8H_{17})_3SnCl$

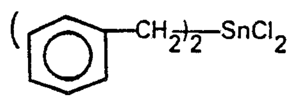

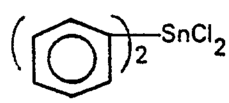

$CH_3SnBr_3$

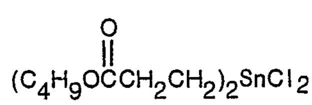

$CH_3SnI_3$

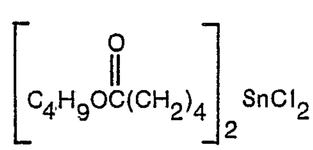

$(C_4H_9)_2SnCl_2$

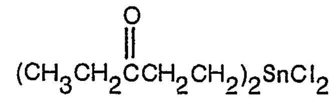

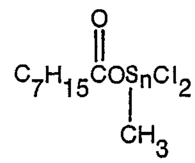

$(C_{12}H_{25})_2SnBr$

$(NCCH_2CH_2)_2SnCl_2$

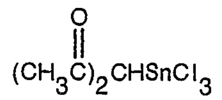

$(HOCH_2CH_2CH_2)_2SnCl_2$

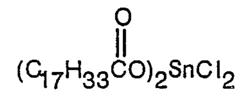

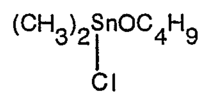

The halogen-containing tin compounds useful in this invention are conveniently prepared by methods well known in the art. For example, methods for preparing these halogen-containing tin compounds are disclosed in U.S. Patents No. 3,745,183, 3,857,868 and 4,134,878.

It should be noted that, in an effort to simplify the foregoing formulas I—XII and render them as clear and concise as possible, some letters are used more than once in the same formula and/or in more than one formula. Thus, for example, $R^1$ appears twice in formula IV and also in formulas II, IIa, III, V and XII. It is intended that, in those instances where the same letter is used either more than once in the same formula or in more than one formula, that letter represents at each independent occurrence any group contained in the set of groups encompassed by its definition, or any and all subsets thereof. It is further intended that any modification or limitation in the definition of a particular letter at one occurrence does not necessarily affect its definition at any other occurrence. For example, should the definition of X in formula II be limited from —$SR^2$, Cl, Br, I,

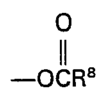

or —$OR^8$ to Cl, Br or I, then X in each of formulae III, IV and V may still represent at each independent occurrence the set of groups consisting of —$SR^2$, Cl, Br, I,

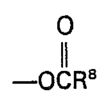

and $OR^8$, or any and all subsets thereof such as, for example, —$SR^2$,

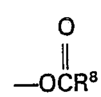

and —$OR^8$, or Cl, Br, I and —$OR^8$.

In one embodiment, the stabilizer compositions of this invention comprise A) an organotin compound or mixture of organotin compounds selected from organotin compounds according to formulas (I), (II), (IIa), (III), (IV) and/or (V) B) a mercaptan-containing organic compound or mixture of mercaptan-containing organic compounds selected from compounds according to formulas (VI), (VII), (VIII), (IX), (X), (XI) and/or (XIa); and, optionally, C) a halogen-containing tin compound or mixture of halogen-containing tin

compounds selected from compounds according to formula (XII), with the proviso that when no halogen-containing tin compound according to formula XII is employed, then at least one of the organotin compounds of component A is selected from compounds according to formulas (II), (III), (IV) or (V) wherein at least one X or $X^1$ is Cl, Br, or I.

In another embodiment, the stabilizer compositions of this invention comprise A) organotin compounds comprising an organotin compound or mixture of organotin compounds according to formula (IIa) either alone or in admixture with any or all the organotin compounds according to formulas (I), (II), (III), (IV) and/or (V); B) a mercaptan-containing organic compound or mixture of mercaptan-containing organic compounds according to formulas (VI), (VII), (VIII), (IX), (X) and (XI); and C) a halogen-containing tin compound or mixture of halogen-containing tin compounds according to formula XII and/or according to formulae (II), (III), (IV) and (V) where at least one X or $X^1$ is Cl, Br or I.

In a further embodiment, the stabilizer compositions of this invention comprise A) an organotin compound or mixture of organotin compounds according to formulas (I), (II), (IIa), (III), (IV) and/or (V); B) a mercaptan-containing organic compound or mixture of mercaptan-containing organic compounds according to formula (XIa) either alone or in admixture with the mercaptan-containing organic compounds according to formulas (VI), (VII), (VIII), (IX), (X) and/or (XI); and, optionally, C) a halogen-containing tin compound or mixture of halogen-containing tin compounds according to formula XII, with the proviso that when no halogen-containing tin compounds according to formula XII is employed, then at least one of the organotin compounds of component A is selected from compounds according to formulas (II), (III), (IV) or (V) wherein at least one X or $X^1$ is Cl, Br or I.

The stabilizer compositions of this invention may be prepared by blending the components thereof in any convenient manner which produces a homogeneous mixture, such as by shaking or stirring in a container. Likewise, the stabilizer compositions of this invention can be incorporated into the halogen-containing organic polymer by admixing the stabilizer composition and polymer, such as, for example, in an appropriate mill or mixer or by any other of the well-known methods which provide uniform distribution of the stabilizer throughout the polymer.

As previously stated, the stabilizer compositions of the present invention comprise an organotin compound or mixture of organotin compounds, a mercaptan-containing organic compound or mixture of mercaptan-containing organic compounds, and, optionally, a halogen-containing tin compound or mixture of halogen-containing compounds. It should be emphasized that all of the stabilizer compositions of this invention contain a weight percent of halogen, based on the total weight of the stabilizer composition, of at least 0.1% and generally not more than 10%, preferably about 0.5% to about 2%. A weight percent of halogen of 0.1% has been found to be effective in providing the stabilizers of the invention with improved performance, while weight percents of halogen in excess of 10% tend to decrease the effectiveness of the stabilizer compositions. This required weight percent of halogen may come from the halogen-containing tin compounds alone; from a combination of the halogen-containing tin compounds and organotin compounds according to formulae (II), (III), (IV) and (V) wherein at least one X or $X^1$ is Cl, Br or I; or solely from organotin compounds according to formulae (II), (III), (IV) and (V) wherein at least one X or $X^1$ is Cl, Br or I. For example, when no halogen-containing tin compound according to formula (XII) is present in the stabilizer composition, i.e. when the weight percent of halogen containing tin compound is 0, then the organotin compound is selected from those represented by formulae (II), (III), (IV) and (V) wherein at least one X or $X^1$ is Cl, Br or I, and said organotin compound or mixture of said organotin compounds is employed in an amount sufficient to provide the required weight percent of halogen.

The stabilizer compositions of this invention contain 10% to 60%, preferably about 20% to about 40% by weight based on the total weight of the stabilizer composition of mercaptan-containing organic compound or mixtures of mercaptan-containing organic compounds. The remainder of the stabilizer composition is comprised of organotin compound or mixture of organotin compounds, and, optionally, halogen-containing tin compound or mixture of halogen-containing tin compounds, said compounds being selected to provide the required weight percent of halogen in the stabilizer composition. While the precise amount of organotin compounds and optional halogen-containing tin compounds employed in the stabilizer compositions of this invention will be determined by the halogen content of the particular compounds utilized, the stabilizer compositions of this invention contain 40% to 90%, preferably about 50% to about 70% organotin compound or mixture of organotin compounds, and 0% to 33%, preferably about 0.1% to about 15% halogen-containing tin compound or mixture of halogen-containing tin compounds, all percentages being by weight based on the total weight of the stabilizer composition.

The stabilizer compositions of this invention are employed in an amount sufficient to impart the desired resistance to heat deterioration to halogen-containing organic polymers. It will be readily apparent to one of ordinary skill in the art, that the precise amount of stabilizer composition used will depend upon several factors, including, but not limited to, the particular halogen-containing organic polymer employed, the temperature to which the polymer will be subjected, and the possible presence of other stabilizing compounds. In general, the more severe the conditions to which the halogen-containing organic polymer is subjected, and the longer the term required for resisting degradation, the greater will be the amount of stabilizer composition required. Generally, as little as about 0.40 parts by weight of the stabilizer composition per hundred parts by weight of halogen-containing organic polymer will be stabilizingly effective. While there is no critical upper limit to the amount of stabilizer composition which can be

employed, amounts in excess of about 10 parts by weight of stabilizer composition per hundred parts by weight of halogen-containing organic polymer do not give an increase in effectiveness commensurate with the additional amount of stabilizer employed.

The stabilized halogen-containing organic polymer compositions of this invention may be used to form articles of manufacture, e.g. pipe. A variety of conventional molding techniques may be employed to form the stabilized compositions into any desired shape.

The following examples illustrate this invention. Unless otherwise indicated, all parts and percentages in the examples and throughout this specification are by weight.

## Examples 1—6

Several mixtures are prepared by dry blending to 110°C in a Henschel high intensity mixer (Model 2JSS) 100.0 parts of polyvinyl chloride (Geon 103EP—F—76 available commercially from B. F. Goodrich Chemical Company) with 3.0 parts of fine particle size calcium carbonate coated with calcium stearate, 1.0 part titanium dioxide, 1.2 parts paraffin wax (ADVAWAX® 165 paraffin wax available commercially from Carstab Corporation), 0.60 part calcium stearate, 0.15 part of an oxidized low molecular weight ethylene homopolymer (AC629A available commercially from Allied Chemical Corporation), and each in turn of the stabilizer compositions listed in Table A in the amounts indicated in Table A, said amounts being parts by weight of stabilizer per hundred parts polyvinyl chloride. The resulting mixture is masticated on a two-roll mill at about 193°C. Samples are taken at one minute intervals beginning after the first introduction of the mix to the mill.

The appearance of each sample taken from the mill is evaluated using the following scale:

| 10 | 9 | 8 | 7 | 6 | 5 | 4 | 3 | 2 | 1 | 0 |
|---|---|---|---|---|---|---|---|---|---|---|

White ————————→ Tan-Orange ————————→ Burn

The results of these tests are indicated in Table A.

TABLE A

| Example No. | Stabilizer Composition | Parts by Weight | Minutes of Milling 1 | 2 | 3 | 4 | 5 | 6 | 7 | 8 | 9 | 10 |
|---|---|---|---|---|---|---|---|---|---|---|---|---|
| | | | COLOUR | | | | | | | | | |
| 1 | Organotin Cmpd. No. 3 from Table I<br>$HSCH_2CH_2\overset{O}{\overset{\|}{C}}OC_8H_{17}$<br>$CH_3SnCl_3$ | 0.40<br>0.08<br>0.01 | 10+ | 10 | 10 | 9 | 7 | 6 | 4 | 2 | 1 | 0 |
| 2a | Organotin Cmpd. No. 9 from Table II<br>$HSCH_2CH_2O\overset{O}{\overset{\|}{C}}C_{17}H_{33}$<br>$SnCl_4$ | 0.40<br>0.20<br>0.001 | 10+ | 10+ | 10 | 9 | 8 | 6 | 4 | 2 | 1 | 0 |
| 2b | Organotin Cmpd. No. 9 from Table II<br>$C(CH_2O\overset{O}{\overset{\|}{C}}CH_2SH)_4$<br>$(CH_3)_2SnCl_2$ | 0.40<br>0.10<br>0.10 | 10+ | 10+ | 10 | 9 | 8 | 6 | 4 | 3 | 2 | 0 |
| 3 | Organotin Cmpd. No. 12 from Table III<br>$HSCH_2CH_2O\overset{O}{\overset{\|}{C}}C_{17}H_{35}$<br>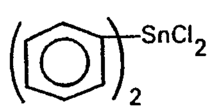 | 0.35<br>0.10<br>0.03 | 10+ | 10+ | 10+ | 10 | 9 | 8 | 5 | 3 | 1 | 0 |

TABLE A (Continued)

| Example No. | Stabilizer Composition | Parts by Weight | Minutes of Milling 1 | 2 | 3 | 4 | 5 | 6 | 7 | 8 | 9 | 10 |
|---|---|---|---|---|---|---|---|---|---|---|---|---|
| | | | COLOUR | | | | | | | | | |
| 4a | Organotin Cmpd. No. 16 from Table III<br>$HSCH_2O\overset{O}{\overset{\|}{C}}(CH_2)_4\overset{O}{\overset{\|}{C}}OCH_2SH$<br>$(C_4H_9)_2SnCl_2$ | 0.50<br>0.30<br>0.15 | 10+ | 10+ | 10+ | 10+ | 9 | 7 | 5 | 2 | 1 | 0 |
| 4b | Organotin Cmpd. No. 16 from Table III<br>$HSCH_2CH_2O\overset{O}{\overset{\|}{C}}(CH_2)_4\overset{O}{\overset{\|}{C}}OCH_2CH_2SH$<br>$(CH_3\overset{O}{\overset{\|}{C}}\text{—})_2CHSnCl_3$ | 0.50<br>0.30<br>0.20 | 10+ | 10+ | 10+ | 10 | 8 | 7 | 4 | 3 | 1 | 0 |
| 5a | Mixture of equal weight proportions of Organotin Cmpd. No. 1 from Table I and Organotin Cmpd. No. 11 from Table II<br>$HSCH_2CH_2CH_2O\overset{O}{\overset{\|}{C}}C_8H_{17}$<br>$SnCl_4$ | 0.30<br>0.03<br>0.003 | 10+ | 10 | 9 | 8 | 7 | 5 | 4 | 3 | 2 | 1 |

TABLE A (Continued)

| Example No. | Stabilizer Composition | Parts by Weight | Minutes of Milling 1 | 2 | 3 | 4 | 5 | 6 | 7 | 8 | 9 | 10 |
|---|---|---|---|---|---|---|---|---|---|---|---|---|
| | | | COLOUR | | | | | | | | | |
| 5b | Mixture of equal weight proportions of Organotin Cmpd. No. 1 from Table I and Organotin Cmpd. No. 11 from Table II<br>$HSCH_2CH_2CH_2O\overset{\overset{O}{\|}}{C}C_8H_{17}$<br>$(CH_3)_2SnCl_2$ | 0.30<br>0.03<br>0.10 | 10+ | 10+ | 10 | 9 | 8 | 5 | 3 | 2 | 1 | 0 |
| 5c | Mixture of equal weight proportions of Organotin Cmpd. No. 1 from Table I and Organotin Cmpd. No. 11 from Table II<br>$HSCH_2\overset{\overset{O}{\|}}{C}OC_8H_{17}$<br>$(CH_3)_2SnBr_2$ | 0.30<br>0.10<br>0.05 | 10+ | 10+ | 10 | 9 | 8 | 6 | 4 | 2 | 1 | 0 |
| 6 | Mixture of equal weight proportions of Organotin Cmpd. No. 19 from Table III and Organotin Cmpd. No. 2 from Table I<br>$HSCH_2CH_2O\overset{\overset{O}{\|}}{C}CH_3$<br>$(CH_3)_2\underset{\underset{Cl}{\vert}}{Sn}OC_4H_9$ | 0.20<br>0.20<br>0.01 | 10+ | 10+ | 10 | 8 | 7 | 5 | 4 | 2 | 2 | 0 |

Examples 7—26

The stabilizer compositions indicated in Table B below are tested in the same manner and with substantially equivalent results as the stabilizer compositions of Examples 1—6.

TABLE B

| Example No. | Stabilizer Composition | Parts by Weight |
|---|---|---|
| 7 | Organotin Cmpd. No. 5 from Table I | 0.40 |
| | $HSCH_2CH_2\overset{O}{\overset{\|}{C}}OC_8H_{17}$ | 0.15 |
| | $CH_3SnBr_3$ | 0.05 |
| 8 | Organotin Cmpd. No. 9 from Table II | 0.40 |
| | $HSCH_2CH_2O\overset{O}{\overset{\|}{C}}C_{17}H_{33}$ | 0.20 |
| | $C_8H_{17}SnCl_3$ | 0.05 |
| 9 | Organotin Cmpd. No. 9 from Table II | 0.40 |
| | $(HSCH_2CH_2O\overset{O}{\overset{\|}{C}}CH_2)_2\underset{OH}{\underset{\|}{C}}-\overset{O}{\overset{\|}{C}}OCH_2CH_2SH$ | 0.40 |
| | $(C_8H_{17})_3SnCl$ | 0.05 |
| 10 | Organotin Cmpd. No. 12 from Table III | 0.35 |
| | $HSCH_2CH_2O\overset{O}{\overset{\|}{C}}C_{17}H_{35}$ | 0.10 |
| | 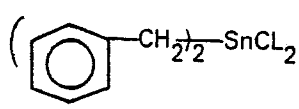 | 0.10 |
| 11a | Organotin Cmpd. No. 18 from Table III | 0.40 |
| | $HSCH_2\underset{CH_3}{\underset{\|}{C}}HO\overset{O}{\overset{\|}{C}}C_8H_{17}$ | 0.60 |
| | $(C_{12}H_{25})_2SnBr_2$ | 0.10 |

TABLE B (Continued)

| Example No. | Stabilizer Composition | Parts by Weight |
|---|---|---|
| 11b | Organotin Cmpd. No. 18 from Table III | 0.40 |
| | 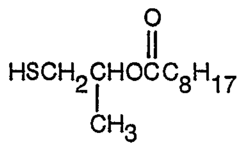 | 0.60 |
| | 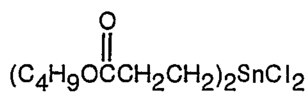 | 0.005 |
| 11c | Organotin Cmpd. No. 18 from Table III | 0.40 |
| | 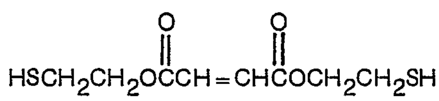 | 0.10 |
| | $(HOCH_2CH_2CH_2)_2SnCl_2$ | 0.10 |
| 11d | Organotin Cmpd. No. 18 from Table III | 0.40 |
| | 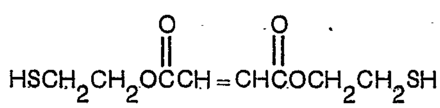 | 0.10 |
| | $(NCCH_2CH_2)_2SnCl_2$ | 0.10 |
| 12 | Mixture of equal weight proportions of Organotin Cmpd. No. 1 from Table I and Organotin Cmpd. No. 11 from Table II | 0.30 |
| | 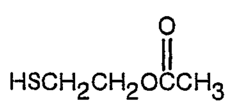 | 0.05 |
| | $CH_3SnCl_3$ | 0.10 |
| 13a | Mixture of equal weight proportions of Organotin Cmpd. No. 19 from Table III and Organotin Cmpd. No. 2 from Table I | 3.20 |
| | 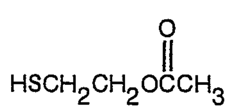 | 0.20 |
| | 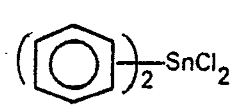 | 0.005 |

TABLE B (Continued)

| Example No. | Stabilizer Composition | Parts by Weight |
|---|---|---|
| 13b | Mixture of equal weight proportions of Organotin Cmpd. No. 19 from Table III and Organotin Cmpd. No. 2 from Table I | 0.20 |
| | $HSCH_2CH_2O\overset{O}{\overset{\|}{C}}CH_3$ | 0.20 |
| | $SnCl_4$ | 0.20 |
| 13c | Mixture of equal weight proportions of Organotin Cmpd. No. 19 from Table III and Organotin Cmpd. No. 2 from Table I | 0.20 |
| | $HSCH_2CH_2O\overset{O}{\overset{\|}{C}}CH_3$ | 0.20 |
| | $(CH_3)_2\underset{Cl}{\underset{\|}{Sn}}OC_4H_9$ | 0.01 |
| 13d | Mixture of equal weight proportions of Organotin Cmpd. No. 19 from Table III and Organotin Cmpd. No. 2 from Table I | 0.20 |
| | $HSCH_2CH_2O\overset{O}{\overset{\|}{C}}CH_3$ | 0.20 |
| | $CH_3\underset{Cl}{\underset{\|}{Sn}}(SCH_2CH_2O\overset{O}{\overset{\|}{C}}C_{11}H_{23})_2$ | 0.05 |
| 13e | Mixture of equal weight proportions of Organotin Cmpd. No. 19 from Table III and Organotin Cmpd. No. 2 from Table I | 0.20 |
| | $HSCH_2CH_2OH$ | 0.20 |
| | $CH_3\underset{Cl}{\underset{\|}{Sn}}(SCH_2\overset{O}{\overset{\|}{C}}OC_8H_{17})_2$ | 0.08 |

TABLE B (Continued)

| Example No. | Stabilizer Composition | Parts by Weight |
|---|---|---|
| 13f | Mixture of equal weight proportions of Organotin Cmpd. No. 19 from Table III and Organotin Cmpd. No. 2 from Table I | 0.20 |
| | $HSCH_2COOH$ | 0.10 |
| | $CH_3\underset{Cl}{\underset{\vert}{Sn}}(SCH_2\overset{O}{\overset{\|}{C}}OC_8H_{17})_2$ | 0.08 |
| 13g | Mixture of equal weight proportions of Organotin Cmpd. No. 19 from Table III and Organotin Cmpd. No. 2 from Table I | 0.20 |
| | $HSCH_2CH_2O\overset{O}{\overset{\|}{C}}CH_3$ | 0.20 |
| | $Cl_2Sn(O\overset{O}{\overset{\|}{C}}C_{17}H_{33})_2$ | 0.10 |
| 14 | Organotin Cmpd. No. 20 from Table III | 0.25 |
| | $HSCH_2\overset{O}{\overset{\|}{C}}OCH(CH_2O\overset{O}{\overset{\|}{C}}CH_2SH)_2$ | 0.10 |
| | $CH_3SnCl_3$ | 0.02 |
| 15 | Mixture of equal weight proportions of Organotin Cmpd. No. 6 from Table I and Organotin Cmpd. No. 11 from Table II | 0.30 |
| | $HSCH_2CH_2O\overset{O}{\overset{\|}{C}}C_{17}H_{33}$ | 0.17 |
| | $C_8H_{17}SnCl_3$ | 0.05 |
| 16 | 1:2 weight ratio mixture of Organotin Cmpd. No. 7 from Table I and Organotin Cmpd. No. 19 from Table III | 0.40 |
| | $HSCH_2\overset{O}{\overset{\|}{C}}OC_8H_{17}$ | 0.10 |
| | $(CH_3)_2SnCl_2$ | 0.04 |

TABLE B (Continued)

| Example No. | Stabilizer Composition | Parts by Weight |
|---|---|---|
| 17 | Organotin Cmpd. No. 21 from Table III | 0.30 |
| | 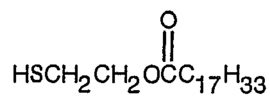 | 0.08 |
| | $CH_3SnCl_3$ | 0.03 |
| 18 | Organotin Cmpd. No. 18 from Table III | 0.40 |
| | 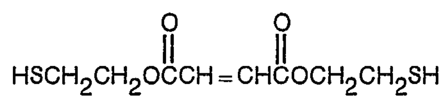 | 0.10 |
| 19 | Organotin Cmpd. No. 18 from Table III | 0.40 |
| | 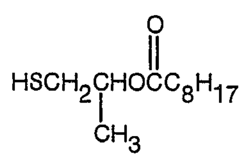 | 0.60 |
| 20 | Organotin Cmpd. No. 7a from Table Ia | 0.325 |
| | $HSC_{12}H_{25}$ | 0.075 |
| | $CH_3SnCl_3$ | 0.025 |
| 21 | Organotin Cmpd. No. 7d from Table Ia | 0.45 |
| | 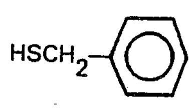 | 0.10 |
| | $SnCl_4$ | 0.01 |
| 22 | Organotin Cmpd. No. 8 from Table II | 0.275 |
| | 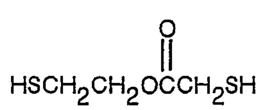 | 0.10 |
| | $(CH_3)_2SnCl_2$ | 0.05 |

TABLE B (Continued)

| Example No. | Stabilizer Composition | Parts by Weight |
|---|---|---|
| 23 | Organotin Cmpd. No. 18 from Table III | 0.225 |
| | 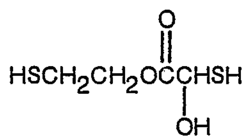 | 0.125 |
| 24 | Organotin Cmpd. No. 7h from Table Ia | 0.15 |
| | 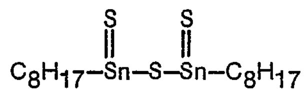 | 0.15 |
| | 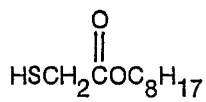 | 0.10 |
| | $C_4H_9SnCl_3$ | 0.03 |
| 25 | Organotin Cmpd. No. 7i from Table Ia | 0.15 |
| | Organotin Cmpd. No. 11 from Table II | 0.20 |
| | 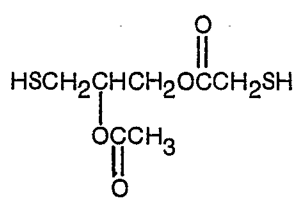 | 0.15 |
| | 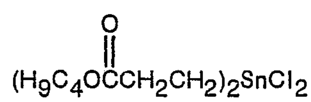 | 0.05 |
| 26 | Organotin Cmpd. No. 7e from Table Ia | 0.25 |
| | 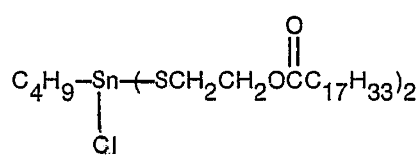 | 0.20 |
| | 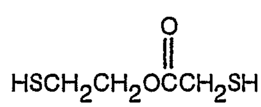 | 0.20 |

**Claims**

1. A composition for stabilizing halogen-containing polymers against the deteriorative effects of heat characterised in that it comprises:

(A) 40% to 90% of an organotin compound or mixture of organotin compounds having one or more tetravalent tin atoms which each have at least one direct tin to carbon bond selected from compounds having the general formulae:

(I) 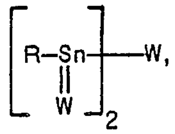

(II) 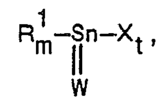

(IIa) 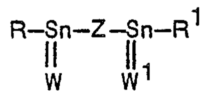

(III) 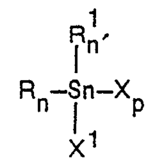

(IV) 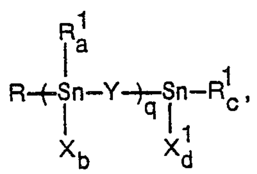, and

(V) 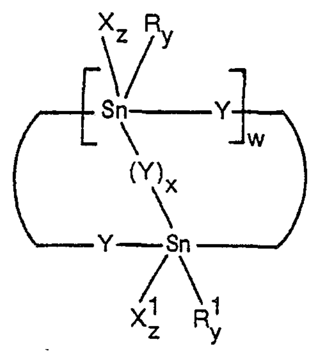

wherein

X and $X^1$ are the same or different and are selected from $-SR^2$, Cl, Br, I,

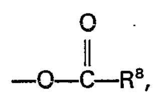

and $O-R^8$ with the proviso that in formula (III) one of X and $X^1$ is $-SR^2$ and the other is $-SR^2$ or

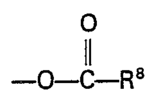

and that in formula (II) when t = 1, in formula (V) when x = 1 and in formula (IV) at least one X or $X^1$ is $-SR^2$;

Y is 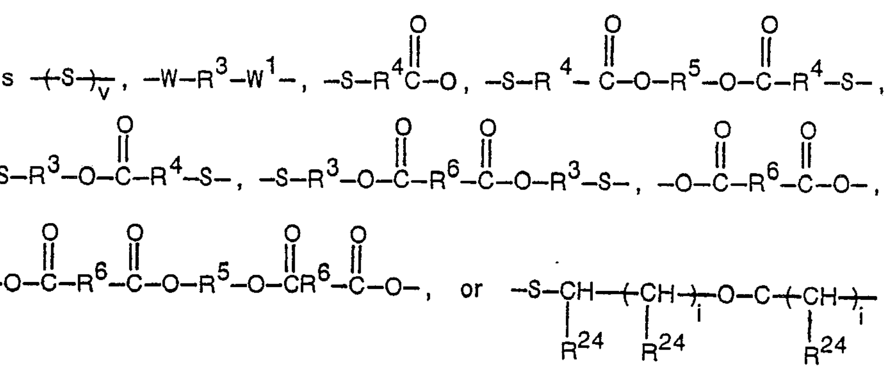

Z is 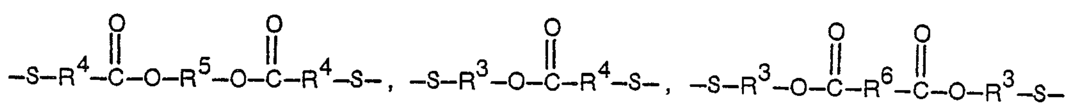

W and $W^1$ are the same or different and are oxygen or sulfur;

R and $R^1$ are the same or different and are selected from alkyl, aryl, alkenyl, aralkyl, alkaryl, cycloalkyl, cycloalkenyl,

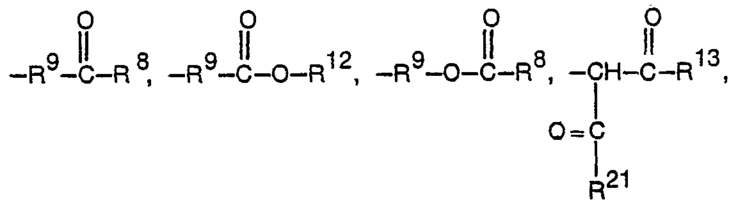 $-R^9-O-R^{12}$, and $-R^9-CN$;

$R^2$ is alkyl, alkenyl, aryl, aralkyl, cycloalkyl, cycloalkenyl,

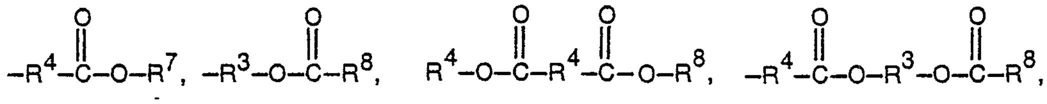

$-R^3-S-R^7$, or $R^3-O-R^8$ ;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms cycloalkylene, or cycloalkenylene;

$R^5$ is $R^3$;

$R^6$ is a carbon to carbon single bond or $R^4$;

$R^7$ is —H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is —H or a monovalent $C_1$ to $C_{20}$ hydrocarbon radical

$R^{13}$ and $R^{21}$ are the same or different and are each $C_1$ to $C_{20}$ alkyl or $C_1$ to $C_{20}$ alkoxy;

$R^{24}$ is

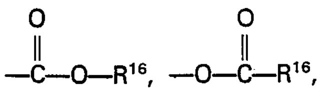 —OH, —SH, aryl, $C_1$ to $C_{18}$ alkyl or —H;

$R^{16}$ is —H or $R^8$;

i = 0 or an integer from 1 to 6 inclusive;

m = 1 or 2 and t = 0 or 1 with the proviso that m + t = 2;

n = 0, 1 or 2, n' = 0, 1 or 2 and p = 1 or 2 with the proviso that n + n' = 1 or 2 and n + n' + p = 3;

a = 0, 1 or 2, b = 0, 1 or 2, q = an integer from 1 to 5 inclusive; c = 1, 2 or 3 and d = 0, 1 or 2 with the proviso that a + b = 2 and c + d = 3;

v = an integer from 1 to 8 inclusive; and

w = 0, 1 or 2, x = 0 or 1, y = 1 or 2, z = 0 or 1 with the proviso that when x = 0 and w = 1 or 2 then y = 1 and z =1, when x = 1 then y = 1, z = 0 and w = 1, when w = 2 then x = 0, y =1 and z = 1 and when w = 0 then x = 0, y = 1, z = 1 and Y is $-W-R^3-W^1-$ or

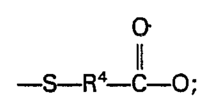

(B) 10% to 60% of a mercaptan-containing organic compound or mixture of mercaptan-containing organic compounds having the general formula selected from:

(VI) 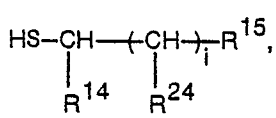 (VII) 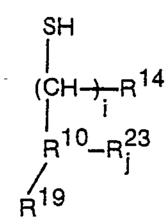

(VIII) 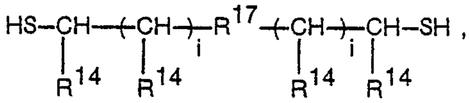

(IX) 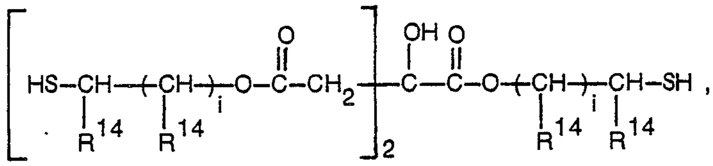

(X) 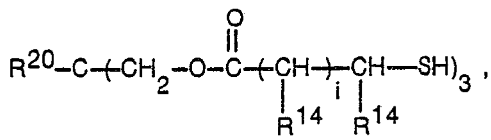 and

(XI) 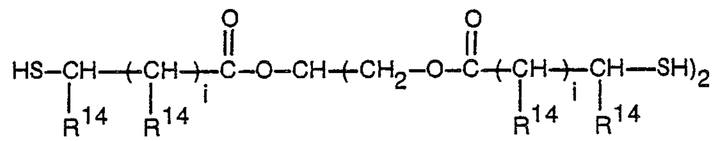 where

(XIa) 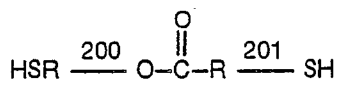

where

$R^{10}$ is cycloalkyl, cycloalkyl or phenyl;

$R^{14}$ is H, aryl or $C_1$ to $C_{18}$ alkyl

$R^{24}$ is as previously defined;

$R^{15}$ is

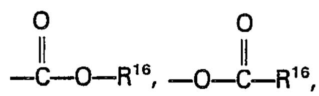 —OH, —SH, aryl, $C_1$ to $C_{18}$ alkyl, or H;

$R^{16}$ is as previously defined;

$R^{17}$ is

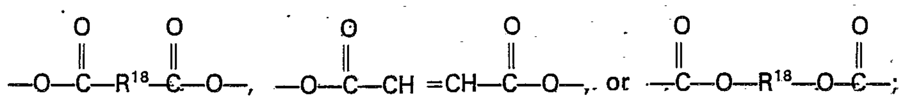

$R^{18}$ is arylene, $C_1$ to $C_8$ alkylene, or

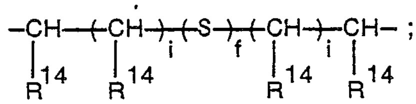

$R^{19}$ is —H or a divalent group which may contain halogen, hydroxy, mercapto or alkyl substituents and which combines with $R^{10}$ when $R^{10}$ is phenyl to form a naphthalene ring;

$R^{20}$ is $-CH_3$, $-CH_2-CH_3$, or 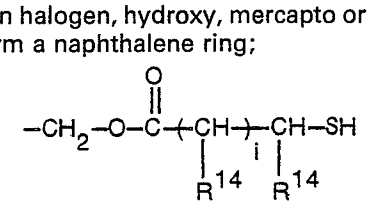

$R^{23}$ is 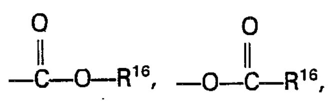

—SH, aryl, $C_1$ to $C_{18}$ alkyl, —OH or —H; with the proviso that in formula (VII) when $R_{10}$ is phenyl, $R^{23}$ is —OH and i = 0, then the —OH and —SH groups are on non-adjacent carbon atoms;

$R^{200}$ and $R^{201}$ are the same of different and are alkylene, alkenylene, arylene, cycloalkylene or cycloalkenylene; or alkylene, alkenylene, arylene, cycloalkylene or cycloalkenylene each substituted with one or two —R, $—OR^7$, $—R^4—OR^7$,

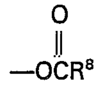 or 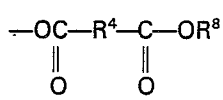 groups;

$R$, $R^4$, $R^8$ and $R^8$ are as previously defined;
i is a previously defined;
$j = 0, 1, 2$ or 3; and
$f = 1$ or 2; and

(C) Up to 33% of a halogen-containing tin compound or mixture of halogen-containing tin compounds wherein the tin atom is tetravalent and has at least one halogen atom bonded directly to it, said halogen-containing tin compound or compounds being selected from compounds having the general formula:

(XII) $$R^{11}_{(g)}-\underset{R^{22}_{(r)}}{\underset{|}{Sn}}-Q_{(h)}$$

where

Q is Cl, Br, or I;
$R^1$ and $R^{12}$ are the same or different and are selected from $-R$, $-R^1$,

$$-R^9-\overset{O}{\overset{\|}{C}}-R^8,\quad -R^9-OR^{12},\quad -R^9-\overset{O}{\overset{\|}{C}}-O-R^{12},\quad -R^9-O-\overset{O}{\overset{\|}{C}}-R^8,$$

$$\overset{R^{21}}{\overset{|}{\overset{O=C}{\overset{|}{-CH}}}}-\overset{O}{\overset{\|}{C}}-R^{13},\quad -R^9-CN,\quad -O-\overset{O}{\overset{\|}{C}}-R^8,\quad -O-R^{12}$$

where $R$, $R^1$, $R^8$, $R^9$, $R^{12}$, $R^{13}$ and $R^{21}$ are as previously defined; and
$g = 0, 1, 2$ or 3, $r = 0, 1, 2$, or 3 and $H = 1, 2, 3$ or 4 with the proviso that $g + r + h = 4$.
all percentages being by weight based on the total weight of the stabilizer composition, with the proviso that when the weight percent of the halogen-containing tin compound (C) is O then at least one of theorganotin compounds of Component A is selected from compounds having the general formulae (II), (IV) or (V) wherein at least one X or $X^1$ is Cl, Br or I, and that the composition contains at least 0.1 wt% of halogen in halogen-containing tin compounds of group A and/or group C.

2. A composition as claimed in claim 1 further characterised in that in general formula (I) R is methyl, butyl or octyl and W is sulfur.

3. A composition as claimed in claim 1 further characterised in that in genereal formula (II) in $R^1$ is methyl or butyl W is sulfur, X is $-SR^2$ where $R^2$ is

$$-R^3O\overset{O}{\overset{\|}{C}}R^8,$$

$m = 1$ and $t = 1$.

4. A composition as claimed in claim 1 further characterised in that in general formula (IIa) R and $R^1$ are methyl, butyl octyl or

$$-R^9-\overset{O}{\overset{\|}{C}}-O-R^{12},$$

W and $W^1$ are oxygen or sulfur; and Z is

$$-S-R^3-O-\overset{O}{\overset{\|}{C}}-R^6-\overset{O}{\overset{\|}{C}}-O-R^3-S-,\quad -S-R^3-O-\overset{O}{\overset{\|}{C}}-R^4-S-\quad \text{or}\quad -S-R^4-\overset{O}{\overset{\|}{C}}-O-R^5-O-C-R^4-S-.$$

5. A composition as claimed in claim 1 further characterised in that in general formula (III) R is methyl or butyl, $R^1$ is methyl or butyl, X is $-SR^2$ where
$R^2$ is

$$-R^3O\overset{O}{\overset{\|}{C}}R^8,$$

$X^1$ is $SR^2$ where $R^2$ is

$$-R^3O\overset{O}{\overset{\|}{C}}R^8,$$

$n = 0$ or 1, $n' = 0$ or 1, $n + n' = 1$ and $p = 2$.

6. A composition as claimed in claim 1 further characterised in that in general formula (IV) R is methyl, X is $-SR^2$ where $R^2$ is

$$-R^3O\overset{O}{\overset{\|}{C}}R^8,$$

$R^1$ is methyl, $X^1$ is $-SR^2$ where $R^2$ is

$$-R^3O\overset{O}{\overset{\|}{C}}R^8,$$

Y is —S—, a = 0, b = 2, c = 1, d = 2 and q = 1.

7. A composition as claimed in claim 1 further characterised in that in general formula (V) R is methyl, $R^1$ is methyl, Y is —S—, w = 1, y = 1 and z = 0.

8. A compostion as claimed in claim 1 further characterised in that in general formula (VI) $R^{14}$ is —H, $R^{24}$ is —H, $R^{15}$ is

$$O\overset{O}{\overset{\|}{C}}R^{16}$$

and i = 1.

9. A composition as claimed in claim 1 further characterised in that in general formula (VII) $R^{50}$ is phenyl, $R^{14}$ is —H, $R^{23}$ is —H, $R^{23}$ is —H, $R^{19}$ is —H, i = 1 and j = 1.

10. A composition as claimed in claim 1 further characterised in that in general formula (VIII) $R^{14}$ is —H, $R^{17}$ is

$$O\overset{O}{\overset{\|}{C}}\,CH{=}CH\,\overset{O}{\overset{\|}{C}}O-$$

and i = 1.

11. A composition as claimed in claim 1 further characterised in that in general formula (IX) $R^{14}$ is —H and i = 1.

12. A composition as claimed in claim 1 further characterised in that in general formula (X) $R^{20}$ is $-C_2H_5$ or

$$-CH_2O\overset{O}{\overset{\|}{C}}-(\underset{R^{14}}{\underset{|}{CH}})_i-\underset{R^{14}}{\underset{|}{CH}}SH$$

$R^{14}$ is —H and i = 1.

13. A composition as claimed in claim 1 further characterised in that in general formula (XI) $R^{14}$ is —H and i = 1.

14. A composition as claimed in claim 1 further characterised in that in general formula (XIa) $R^{200}$ is $-CH_2CH_2$ or

$$-\underset{C_9H_{19}}{\underset{|}{CH^2}}CH-\quad,\ \text{and } R^{201} \text{ is } -CH_2 \text{ or } \quad -\underset{OH}{\underset{|}{CH}}-\ .$$

15. A composition as claimed in any one of claims 2 to 7 further characterised in that the mercaptan-containing organic compound or mixture of mercaptan-containing organic compounds is according to general formula (VI).

16. A composition as claimed in claim 15 further characterised in that in general formula (VI) $R^{14}$ is —H, $R^{24}$ is —H, $R^{15}$ is

$$-\overset{O}{\overset{\|}{C}}R^{16}$$

and i = 1.

17. A composition as claimed in any one of the preceding claims further characterised in that the weight percent of halogen-containing tin compound (C) is 0.

18. A composition as claimed in any one of claims 1—16 further characterised in that the weight percent of halogen-containing tin compound or mixture of halogen-containing tin compounds according to formula (XIII) is 0.1% to 15%.

19. A composition as claimed in claim 18 further characterised in that in formula (XIII) $R^{11}$ is methyl, $R^{22}$ is —Cl, Q is Cl, g = 1, h = 2 and r = 1.

20. A composition as claimed in any one of claims 17—19 further characterised in that the mercaptan-containing organic compound or mixture of mercaptan-containing organic compounds (B) is according to general formula (VI).

21. A polymer composition stabilized against the deteriorative effects of heat comprising a halogen-containing organic polymer and characterised in that it contains a stabilizing amount of the composition claimed in any of claims 1 to 20.

22. A process for stabilizing a halogen-containing organic polymer against the deteriorative effects of heat characterised in that it comprises admixing said polymer with a stabilizing amount of the composition claimed in any one of claims 1 to 20.

23. A shaped article of manufacture such as a pipe comprising a halogen-containing organic polymer and characterised in that it contains a stabilizing amount of the composition according any one of claims 1 to 20.

24. A composition as claimed in any of claims 1 to 20 further characterised in that the weight percent of halogen in the stabilizing composition is 0.5% to 2%, based upon the total weight of the composition.

**Patentansprüche**

1. Zusammensetzung zum Stabilisieren von halogenhaltigen Polymeren gegen die verschlechternden Wirkungen von Wärme, dadurch gekennzeichnet, daß sie umfaßt:

(A) 40 bis 90 % einer Organozinnverbindung oder eines Gemisches von Organozinnverbindungen mit einem oder mehreren vierwertigen Zinnatomen, von denen jedes mindestens eine direkte Zinn-Kohlenstoff-Bindung hat, ausgewählt aus Verbindungen mit den nachstehenden allgemeinen Formeln:

(I) 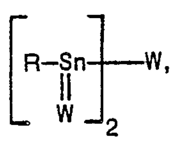

(II) 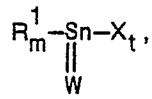

(IIa) 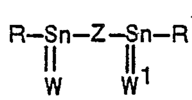

(III) 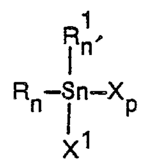

(IV) 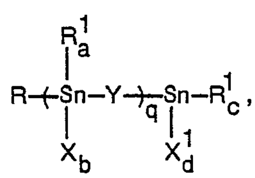 und

(V) 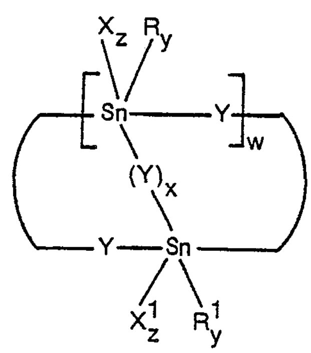

in denen

X und $X^1$ gleich oder verschieden sind und ausgewählt sind aus

$—SR^2$, Cl, Br, I,

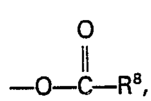

und $—O—R^8$ mit der Maßgabe, daß in der Formel (III) eines der X und $X^1$ $—SR^2$ ist, und das andere $—SR^2$ oder

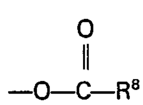

ist und daß in Formel (II), wenn t = 1, in Formel (V), wenn x = 1, und in Formel (IV) wenigstens eines X oder $X^1$ $—SR^2$ ist;

Y ist 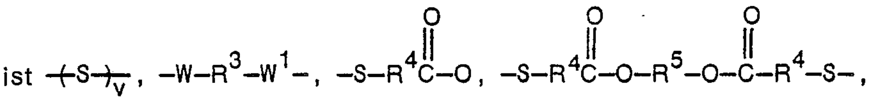

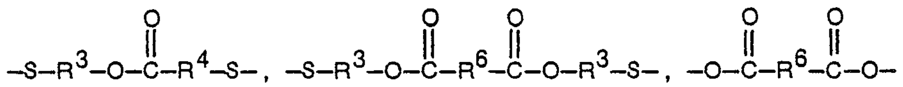

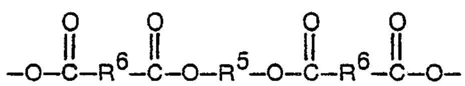 oder 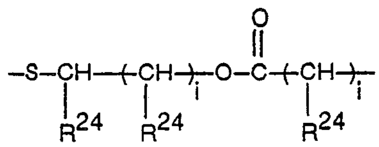

Z ist 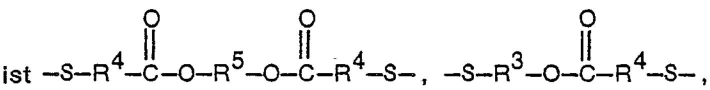

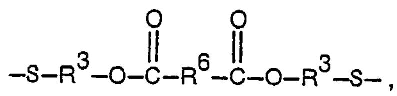 ist,

W und $W^1$ gleich oder verschieden sind und jeweils ein Saurestoff- oder Schwefelatom bedeuten,

R und $R^1$ gleich oder verschieden sind und ausgewählt sind aus Alkyl-, Aryl-, Alkenyl-, Aralkyl, Alkaryl, Cycloalkyl, Cycloalkenyl-,

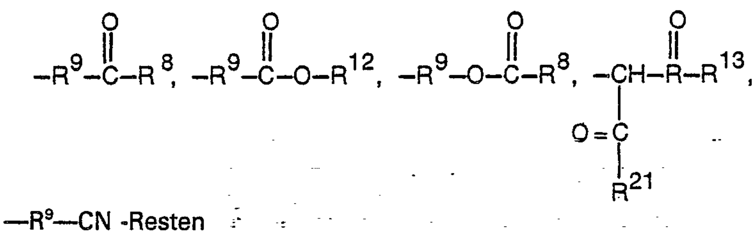

$—R^9—O—R^{12}$ und $—R^9—CN$ -Resten

$R^2$ ein Alkyl-, Alkenyl-, Aryl-, Aralkyl-, Cycloalkyl-, Cycloalkenyl-,

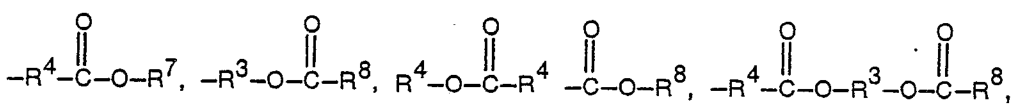

$-R^3-S-R^7$, oder $R^3-O-R^8$ : –Rest ist;

$R^3$ ein Alkykenrest mit wenigstens 1 Kohlenstoffatomen, ein Alkenylenrest mit wenigstens 2 Kohlenstoffatomen, ein Cycloalkylenrest oder ein Cycloalkenylenrest ist,

$R^4$ ein Alkylenrest, Arylenrest, Alkenylenrest mit wenigstens 2 Kohlenstoffatomen, ein Cycloalkylen- oder Cycloalkenylenrest ist,

$R^5$ $R^3$ ist,

$R^6$ eine Kohlenstoll-Kohlenstoff-Einzelbindung oder $R^4$ ist,

$R^7$ ein Wasserstoffatom oder der Rest $R^8$ ist,

$R^8$ ein Alkyl-, Alkenyl-, Aryl-, Aralkyl-, Alkaryl-, Cycloalkyl- oder ein Cycloalkenyl-Rest ist,

$R^9$ ein $C_1$- bis $C_4$-Alkylen-Rest ist,

$R^{12}$ ein Wasserstoffatome oder ein einwertiger $C_1$- bis $C_{20}$-Kohlenwasserstoffrest ist,

$R^{13}$ und $R^{21}$ gleich oder verschieden sind und jedes $C_1$- bis $C_{20}$-Alkyl- oder $C_1$- bis $C_{20}$-Alkoxy-Reste sind,

$R^{24}$

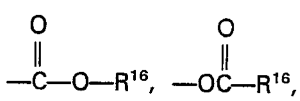

—OH, —SH, ein Arylrest, ein $C_1$- bis $C_{18}$-Alkylrest oder ein Wasserstoffatom ist,

$R^{16}$ ein Wasserstoffatom oder der Rest $R^8$ ist,

i = 0 oder eine ganze Zahl von 1 bis 6 einschließlich,

m = 1 oder 2 und t = 0 oder 1 mit der Maßgabe, daß m + t = 2.

n = 0, 1 oder 2, n' = 0, 1 oder 2 und p = 1 oder 2 mit der Maßgabe, daß n + n' = 1 oder 2 und n + n' + p = 3;

a = 0, 1 oder 2, b = 0, 1 oder 2, q = eine ganze Zahl von 1 bis 5 einschließlich; c = 1, 2 oder 3 und d = 0, 1 oder 2 mit der Maßgabe, daß a + b = 2 und c + d = 3;

v = eine ganze Zahl von 1 bis 8 einschließlich; und

w = 0, 1 oder 2, x = 0 oder 1, y = oder 2, z = 0 oder 1 mit der Maßgabe, daß, wenn x = 0 und w = 1 oder 2, dann y = 1 und z = 1, wenn x = 1, dann y = 1, z = 0 und w = 1, wenn w = 2, dann x = 0, y = 1 und z = 1 und wenn w = 0, dann x = 0, y = 1, z = 1 und Y ist —W—$R^3$—$W^1$ oder

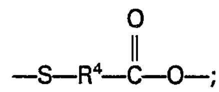

(B) 10 bis 60 % einer mercaptanhaltigen organischen Verbindung oder eines Gemisches von mercaptanhaltigen organischen Verbindungen mit den nachstehenden allgemeinen Formeln

(VI) 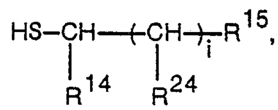

(VII) 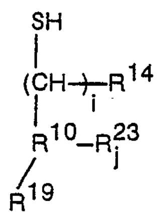

(VIII) 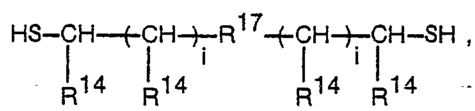

(IX) 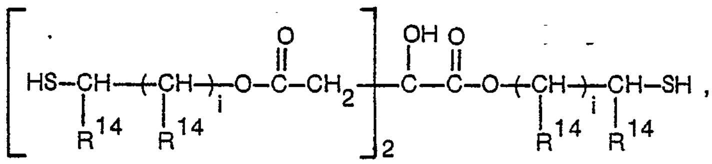

(X) 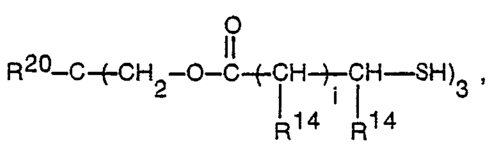 und

(XI) 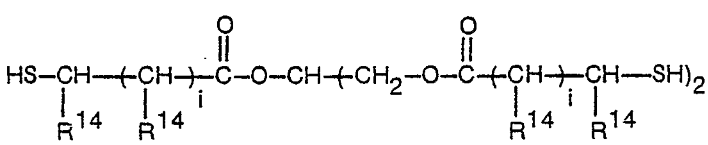

(XIa) 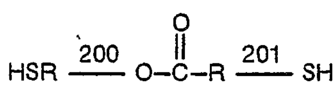

in denen

$R^{10}$ ien Cycloalkyl-, Cycloalkenyl- oder Phenyl-Rest ist,

$R^{14}$ ein Wasserstoffatom, ein Aryl- oder $C_1$- bis $C_{18}$-Alkyl-Rest ist,

$R^{24}$ die vorstehend definierte Bedeutung hat,

$R^{15}$ ein

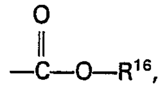, 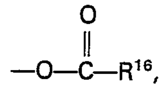,

—OH, —SH, Aryl-, $C_1$- bis $C_{18}$-Alkyl-Rest oder ein Wasserstoffatom ist,

$R^{16}$ die vorstehend definierte Bedeutung hat,

$R^{17}$ ein 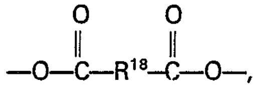, 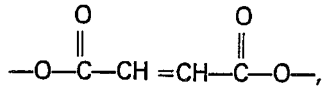, oder 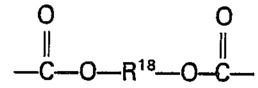 Rest ist,

$R^{18}$ Arylen-, $C_1$- bis $C_8$-Alkylen- oder ein

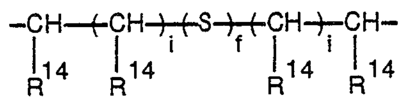 ; –Rest ist,

$R^{19}$ ein Wasserstoffatom oder ein zweiwertiger Rest ist, der Halogen, Hydroxy-, Mercapto- oder Alkyl-Substituenten enthalten kann und der sich mit $R^{10}$ unter Bildung eines Naphtahlinrings kombiniert, wenn $R^{10}$ ein Phenylrest ist,

$R^{20}$ ein $-CH_3$, $-CH_2-CH_3$, oder 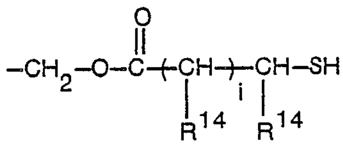 ; –Rest ist,

$R^{23}$ ein 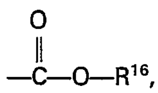, 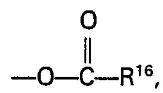,

—SH, Aryl-, $C_1$- bis $C_{18}$-Alkyl-Rest, eine Hydroxylgruppe oder ein Wasserstofatom ist mit der Maßgabe, daß in Formel (VII), wenn $R^{10}$ ein Phenylrest ist, $R^{23}$ eine Hydroxylgruppe ist und i = O, dann sitzen die —OH und —SH -Gruppen an nicht-benachbarten Kohlenstoffatomen,

$R^{200}$ und $R^{201}$ gleich oder verschieden sind und Alkylen-, Alkenylen-, Arylen-, Cycloalkylen- oder Cycloalkenylen-Reste oder Alkylen-, Alkenylen-, Arylen-, Cycloalkylen- oder Cycloalkenylen-Reste, die jeder mit einem oder zwei -R,

$—OR^7$, $—R^4—OR^7$, 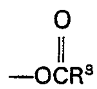 oder 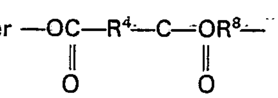

Gruppen substituiert sind, wobei

R, $R^4$ und $R^8$ die vorstehend definierte Bedeutung haben,

i die vorstehend definierte Bedeutung hat,

j = 0, 1, 2 oder 3, und

f = 1 oder 2, und

(C) bis zu 33% einer halogenhaltigen Zinnverbindung oder eines Gemisches von halogenhaltigen Zinnverbindungen, in denen das Zinnatom vierwertig ist und mindestens ein Halogenatom direkt daran gebunden ist, wobei die halogenhaltige Zinnverbindung oder-Verbindungen ausgewählt sind aus Verbindungen mitr der folgenden allgemeinen Formel:

(XII) 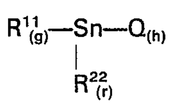

in der

Q Cl, Br oder I ist,

$R^{11}$ und $R^{22}$ gleich oder verschieden sind und ausgewählt sind aus —R, $—R^1$,

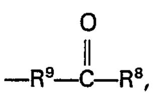, $—R^9—OR^{12}$, 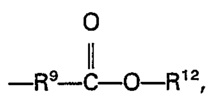, 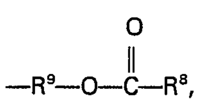, 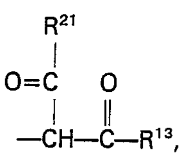,

$—R^9—CN$, 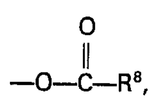, $—O—R^{12}$ —Resten,

worin R, $R^1$, $R^8$, $R^9$, $R^{12}$, $R^{13}$ und $R^{21}$ die vorstehend definierte Bedeutung haben, und $g = 0, 1, 2,$ oder $3$, $r = 0, 1, 2$ oder $3$ und $h = 1, 2, 3$ oder $4$ mit der Maßabe, daß $g + r + h = 4$.

Alle Prozentangaben sind Gewichtsprozent, bezogen aud das Gesamtgewicht der Stabilisatorzusammensetzung mit der Maßgabe, daß, wenn der Gewichtsprozentsatz der halogenhaltigen Zinnverbindung (C) O ist, dann mindestens eine der Organozinnverbindungen der Komponente A ausgewählt ist aus Verbindungen mit der allgemeinen Formel (II), (IV) oder (V), in denen mindestens eines X oder $X^1$ Cl, Br oder I ist, und daß die Zusammensetzung mindestens 0,1 Gew.% Halogen in halogenhaltigen Zinnverbindungen der Gruppe A und/oder Gruppe C enthält.

2. Zusammensetzung nach Anspruch 1, dadurch gekennzeichnet, daß in der allgemeinen Formel (I) R ein Methyl-, Butyl- oder Octyl-Rest ist und W Schwefel ist.

3. Zusammensetzung nach Anspruch 1, dadurch gekennzeichnet, daß in der allgemeinen Formel (II) $R^1$ ein Methyl- oder Butyl-Rest ist, W Schwefel ist und X $-SR^2$ ist, worin $R^2$

$$-R^3O\overset{\overset{O}{\|}}{C}R^8$$

ist und $m = 1$ und $t = 1$.

4. Zusammensetzung nach Anspruch 1, dadurch gekennzeichnet, daß in der allgemeinen Formel (IIa) R und $R^1$ Methyl-, Butyl-, Octyl- oder

$$-R^9-\overset{\overset{O}{\|}}{C}-O-R^{12}$$

-Reste sind, W und $W^1$ Sauerstoff oder Schwefel sind und Z ein

$$-S-R^3-O-\overset{\overset{O}{\|}}{C}-R^6-\overset{\overset{O}{\|}}{C}-O-R^3-S-,\quad -S-R^3-O-\overset{\overset{O}{\|}}{C}-R^4-S-\ \text{oder}$$

$$-S-R^4-\overset{\overset{O}{\|}}{C}-O-R^5-O-C-R^4-S-\ \text{-Rest ist.}$$

5. Zusammensetzung nach Anspruch 1, dadurch gekennzeichnet, daß in der allgemeinen Formel (III) R ein Methyl- oder Butyl-Rest ist, $R^1$ ein Methyl- oder Butyl-Rest ist, X ein Rest $-SR^2$ ist, worin $R^2$ ein Rest

$$-R^3O\overset{\overset{O}{\|}}{C}R^8$$

ist, $X^1$ ein Rest $-SR^2$ ist, worin $R^2$ ein Rest

$$-R^3O\overset{\overset{O}{\|}}{C}R^8,$$

$n = 0$ oder, $n' = 0$ oder 1, $n + n' = 1$ und $p = 2$ ist.

6. Zusammensetzung nach Anspruch 1, dadurch gekennzeichnet, daß in der allgemeinen Formel (IV) R ein Methyl-Rest ist, X ein Rest $-SR^2$ ist, worin $R^2$ ein Rest

$$-R^3O\overset{\overset{O}{\|}}{C}R^8$$

ist $R^1$ ein Methyl-Rest ist, $X^1$ ein Rest $-SR^2$ ist, worin $R^2$ ein Rest

$$-{}^3O\overset{\overset{O}{\|}}{C}R^8$$

ist, Y —S— ist, $a = 0$, $b = 2$, $c = 1$, $d = 2$ und $q = 1$.

7. Zusammensetzung nach Anspruch 1, dadurch gekennzeichnet, daß in der allgemeinen Formel (V) R ein Methylrest ist, $R^1$ ein Methylrest ist, Y —S— ist, $w = 1$, $X = 1$, $y = 1$ und $z = 0$.

8. Zusammensetzung nach Anspruch 1, dadurch gekennzeichnet, daß in der allgemeinen Formel (VI) $R^{14}$ ein Wasserstoffatom ist, $R^{24}$ ein Wasserstoffatom ist, $R^{16}$ ein Rest

$$-O\overset{O}{\overset{\|}{C}}R^{16}$$

ist und i = 1.

9. Zusammensetzung nach Anspruch 1, dadurch gekennzeichnet, daß in der allgemeinen Formel (VII) $R^{10}$ ein Phenylrest ist, $R^{14}$ ein Wasserstoffatom ist, $R^{23}$ ein Wasserstoffatom ist, $R^{19}$ ein Wasserstoffatom ist, i = 1 und j = 1.

10. Zusammensetzung nach Anspruch 1, dadurch gekennzeichnet, daß in der allgemeinen Formel (VIII) $R^{14}$ ein Wasserstoffatom ist, $R^{17}$ ein Rest

$$-O\overset{O}{\overset{\|}{C}}CH{=}CH\overset{O}{\overset{\|}{C}}O-$$

ist und i = 1.

11. Zusammensetzung nach Anspruch 1, dadurch gekennzeichnet, daß in der allgemeinen formel (IX) $R^{14}$ ein Wasserstoffatom ist und i = 1.

12. Zusammensetzung nach Anspruch 1, dadurch gekennzeichnet, daß in der allgemeinen Formel (X) $R^{20}$ ein Rest $-C_2H_5$ oder

$$-CH_2O\overset{O}{\overset{\|}{C}}\left(\underset{R^{14}}{\underset{|}{C}H}\right)_{i}\underset{R^{14}}{\underset{|}{C}H}SH$$

ist, $R^{14}$ ein Wasserstoffatom ist und i = 1.

13. Zusammensetzung nach Anspruch 1, dadurch gekennzeichnet, daß in der allgemeinen Formel (XI) $R^{14}$ ein Wsserstoffatom ist und i = 1.

14. Zusmmensetzung nach Anspruch 1, dadurch gekennzeichnet, daß in der allgemeinen Formel (XIa) $R^{200}$ ein Rest $-CH_2CH_2-$ oder

$$-CH_2\underset{C_9H_{19}}{\underset{|}{C}H}-$$

ist und $R^{201}$ ein Rest $-CH_2-$ oder

$$-\underset{OH}{\underset{|}{C}H}-$$

ist.

15. Zusammensetzung nach einem der Ansprüche 2 bis 7, dadurch gekennzeichnet, daß die mercaptanhaltige organische Verbindung oder als Gemisch der mercaptanhaltigen organischen Verbindungen gemäß der allgemeinen Formel (VI) ist.

16. Zusammensetzung nach Anspruch 15, dadurch gekennzeichnet, daß in der allgemeinen Formel (VI) $R^{14}$ ein Wasserstoffatom ist, $R^{24}$ ein Wasserstoffatom ist, $R^{15}$ ein Rest

$$-\overset{O}{\overset{\|}{C}}R^{16}$$

ist und i = 1.

17. Zusammensetzung nach einem der vorhergehenden Ansprüche, dadurch gekennzeichnet, daß der Gewichtsprozentsatz der halogenhaltigen Zinnverbindung (C) O ist.

18. Zusammensetzung nach einem der Ansprüche 1 bis 16, dadurch gekennzeichnet, daß der Gewichtsprozentsatz der halogenhaltigen Zinnverbindung oder des Gemisches der halogenhaltigen Zinnverbindungen gemäß der Formel (XII) 0, 1 bis 15 % beträgt.

19. Zusammensetzung nach Anspruch 18, dadurch gekennzeichnet, daß in der Formel (XII) $R^{11}$ ein Methylrest ist, $R^{22}$ ein Chloratom ist, Q ein Chloratom ist, g = 1, h = 2 und r = 1.

20. Zusammensetzung nach einem der Ansprüche 17 bis 19, dadurch gekennzeichnet, daß die mercaptanhaltige organische Verbindung oder das Gemisch der mercapanhaltigen organischen Verbindungen (B) gemäß der allgemeinen Formel (VI) ist.

21. Eine polymere Zusammensetsung, stabilisiert gegen die verschlechternden Wirkungen der Wärme, umfassend ein halogenhaltiges organisches Polymer und dadurch charakterisiert, daß sie eine stabilisierende Menge der in einem der Ansprüche 1 bis 20 beansprchten Zusammensetzung enthält.

22. Verfahren zum Stabilisieren eines halogenhaltigen organischen Polymers gegen die verschlechternden Wirkungen der Wärme, dadurch gekennzeichnet, daß es das Zusammenmischen des Polymers mit einer stabilisierenden Menge der in einem der Ansprüche 1 bis 20 beanspruchten Zusammensetzung umfaßt.

23. Ein geformter Artikel, wie zum Beispiel ein Rohr, umfasssend ein halogenhaltiges organisches Polymer und dadurch gekennzeichnet, daß er eine stabilisierende Menge der Zusammensetzung gemäß einer der Ansprüche 1 bis 20 enthält.

24. Zusammensetsung nach einem der Ansprüche 1 bis 20, dadurch gekennzeichnet, daß der Gewichtsprozentatz an Halogen in der stabilisierenen Zusammensetzung 0,5 bis 2 %, bezogen auf das Gesamtgewicht der Zusammensetzung, beträgt.

**Revendications**

1. Composition pour stabiliser des polymères renfermant de l'halogène à l'encontre des effets de détérioration thermique, characterisée par le fait qu'elle comprend:

(A) 40 à 90% d'un composé organo-étain ou d'un mélange de composés organo-étain présentant un ou plus d'un atome d'étain tétravalent qui ont chacun au moins une liaison directe étain à carbone, choisi parmi les composés répondant aux formules générales:

(I) 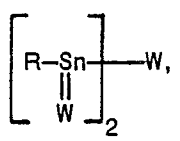

(II) 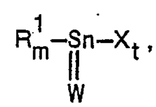

(IIa) 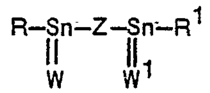

(III) 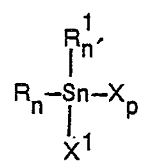

(IV) 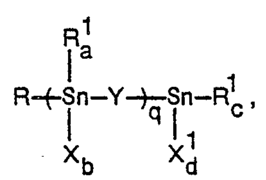 et

(V) 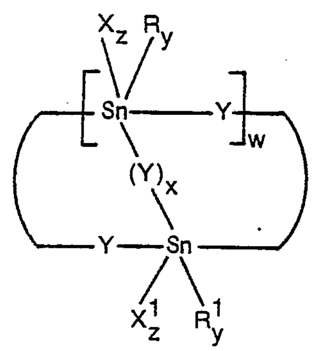

dans lesquelles X et $X^1$ sont identiques ou différents et sont choisis parmi $-SR^2$, Cl, I,

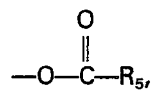

et $O-R^8$ pourvu que dans la formule (III) un des X et $X^1$ est $-SR^2$ et l'autre est $-SR^2$ ou

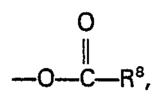

et que dans la formule (II) lorsque t = 1, dans la formule (V) lorsque X = 1 et dans la formule (IV) au moins X ou $X^1$ est $-SR^2$;

Y est $-(S)_v-$, $-W-R^3-W^1-$, 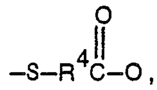, 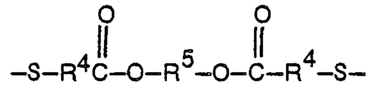,

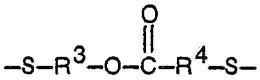, 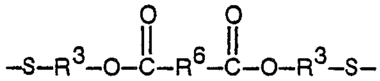, 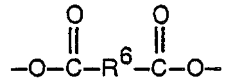,

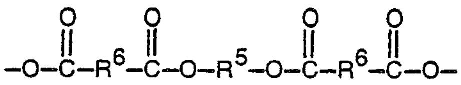, ou 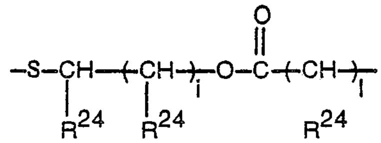

Z is 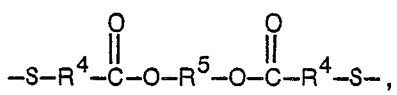, 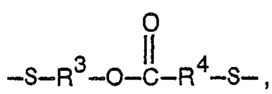, 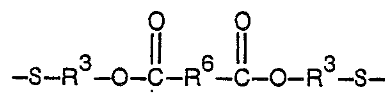,

W et $W^1$ sont identiques ou différents et sont de l'oxygène ou de soufre; R et $R^1$ sont identiques ou différents et sont choisis parmi les groupes alkyle, aryle, alcényle, aralkyle, alkaryle, cycloalkyle, cycloalcényle,

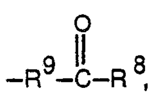, 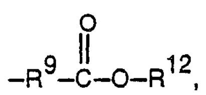, 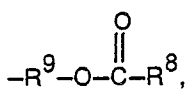, 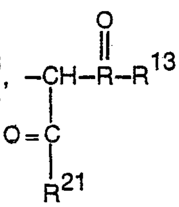,

$-R^9-O-R^{12}$, et $-R^9-CN$ ;

$R^2$ est un groupe alkyle, alcényle, aryle, aralkyle, cycloalkyle, cycloalcényle,

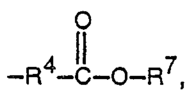, 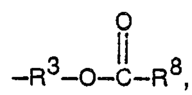, 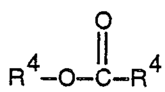 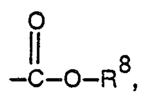, 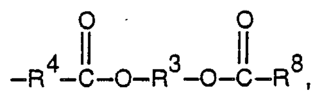,

$-R^3-S-R^7$, ou $R^3-O-R^8$ :

$R^3$ est un groupe alcylène à au moins 2 atomes de carbone, arylène, alcénylène a x au moins 2 atomes de carbone, cycloalkylène, cycloalcénylene

$R^4$ est un groupe alcylène, arylène, alcénylène, à un moins 2 atomes de carbone, cycloalkylène ou cycloalcénylène;

$R^5$ est $R^3$;

$R^6$ est une liaison simple carbone-carbone ou $R^4$;

$R^7$ est —H ou $R^8$;

$R^8$ est un groupe alkyle, alcényle, aryle, aralkyle, alkaryle, cycloalkyle, ou cycloalcényle;

$R^9$ est un groupe alcylène en $C_1$ à $C_4$;

$R^{12}$ est est —H ou un radical d'hydrocarbure monovalent en $C_1$ à $R_{20}$;

$R^{13}$ et $R^{21}$ sont identiques ou différents et sont chacun un groupe alkyle en $C_1$ à $C_{20}$ ou alcoxy en $C_1$ à $C_{20}$;

$R^{24}$ est

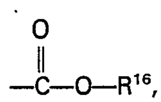, 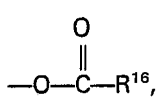,

—OH, —SH, un aryle un groupe alkyle en $C_1$ à $C_{18}$ ou —H;

$R^{16}$ est —H ou $R^8$;

i = 0 ou un nombre entier de 1 à 6 inclus;

m = 1 ou 2 et t = 0 ou 1 pourvu que m + t = 2;

n = 0, 1 ou 2, n' = 0, 1 ou 2 et p = 1 ou 2 pourvu que n + n' = 1 ou 2 et n + n' + p = 3;

a = 0, 1 ou 2, b = 0, 1 ou 2, q = un nombre entier de 1 à 5 inclus; c = 1, 2 ou 3 et d = 0, 1 ou 2 pourvu que a + b = 2 et c + d = 3;

v = un nombre entier de 1 à 8 inclus; et

w = 0, 1 ou 2, x = 0 ou 1, y = 1 ou 2, z = 0 ou 1 pourvu que lorsque x = 0 et w = 1 ou 2, alors y = 1 et z = 1, quand x = 1 alors y = 1, z = 0 et w = 1, quand w = 2 alors x = 0, y = 1 et z = 1 et quand w = 0 ensuite x = 0, y = 1, z = 1 et Y est $—W—R^3—W^1$ ou

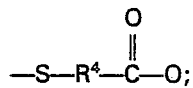

(B) 10 à 60% d'un composé organique renfermant du mercaptan ou un mélange de composés organiques refermant du mercaptan répondant à la formule générale choisie parmi:

(VI) 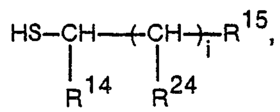

(VII) 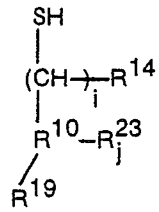

(VIII) 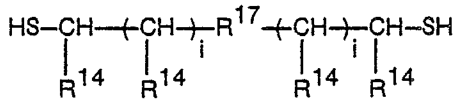

(IX) 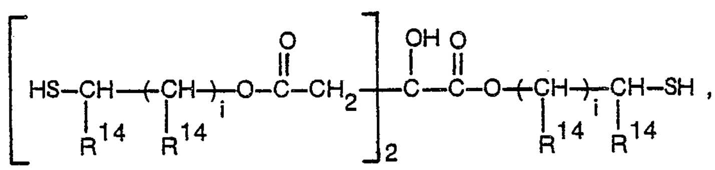

(X) 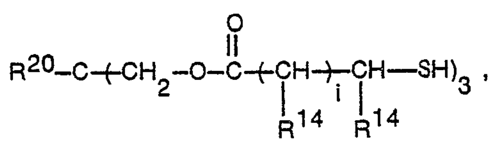 et

(XI) 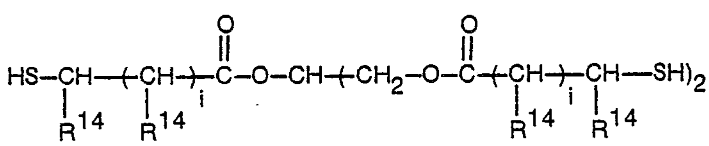 ou

(XIa) 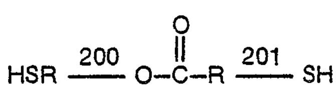

où

$R^{10}$ est un groupe cycloalkyle, cycloalcényle ou phényle;
$R^{14}$ est un groupe aryle ou un groupe alkyle en $C_1$ à $C_{18}$;
$R^{24}$ est tel que précédemment défini;
$R^{15}$ est

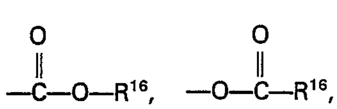

—OH, —SH, un aryle, un alkyle en $C_1$ à $C_{18}$ ou H;

$R^{16}$ est tel que précédemment défini;
$R^{17}$ est

$$-O-\overset{O}{\overset{\|}{C}}-R^{18}-\overset{O}{\overset{\|}{C}}-O-,\quad -O-\overset{O}{\overset{\|}{C}}-CH=CH-\overset{O}{\overset{\|}{C}}-O-,\quad \text{ou}\quad -\overset{O}{\overset{\|}{C}}-O-R^{18}-O-\overset{O}{\overset{\|}{C}}-;$$

$R^{18}$ est un groupe arylène, alcylène en $C_1$ à $C_8$ ou

$$-\underset{R^{14}}{\underset{|}{CH}}-(\underset{R^{14}}{\underset{|}{CH}})_i-(S)_f-(\underset{R^{14}}{\underset{|}{CH}})_i-\underset{R^{14}}{\underset{|}{CH}}-\ ;$$

$R^{19}$ est —H ou un groupe divalent qui peut contenir des substituants halogènes, hydroxy, mercapto ou alkyle et qui se combinent avec $R^{10}$ lorsque $R^{10}$ est du phényle pour former un cycle naphtalène:

$$R^{20}\ \text{est}\ -CH_3,\quad -CH_2-CH_3,\quad \text{ou}\quad -CH_2-O-\overset{O}{\overset{\|}{C}}-(\underset{R^{14}}{\underset{|}{CH}})_i-\underset{R^{14}}{\underset{|}{CH}}-SH\ ;$$

$R^{23}$ est

$$-\overset{C}{\overset{\|}{C}}-O-R^{16},\quad -O-\overset{C}{\overset{\|}{C}}-R^{16},$$

—SH, aryle, alkyle en $C_1$ à $C_{18}$, —OH ou H; pourvu que dans la formule (VII) lorsque $R^{10}$ est un groupe phényle, $R^{23}$ est —OH et $i = 0$, alors les groupes —OH et —SH sont sur des atomes de carbone non-adjacents;

$R^{200}$ et $R^{201}$ sont identique ou différents et sont des groupes alkylène, alcénylène, arylène, cycloalkylène ou cycloalcénylène; ou des groupes alkylène, alcénylène, arylène, cycloalkylène ou cycloalcénylène substitués chacun par un ou deux —R, —$OR^7$, —$R^4OR^7$,

$$-O\overset{O}{\overset{\|}{C}}R^8\quad \text{ou}\quad -O\underset{O}{\underset{\|}{C}}-R^4-\underset{O}{\underset{\|}{C}}-OR^8;$$

R, $R^4$, $R^7$ et $R^8$ sont tels que précédemment définis;
i est tel que précédemment défini;
$j = 0, 1, 2$ ou 3; et
$f = 1$ ou 2; et

(C) jusqu' à 33% de composé étain renfermant de l'halogène ou d'un mélange de composés etain renferment de l'halogène, dans lesquels l'atome d'étain est tetravalent et présente au moins un atome d'halogène qui lui est directement lié, ce composé ou ces composés étain renfermant de l'halogène étant choisis parmi les composés répondant à la formule générale

$$\text{(XII)}\qquad R^{11}_{(g)}-\underset{R^{22}_{(r)}}{\underset{|}{Sn}}-Q_{(h)}$$

où

Q est Cl, Br ou I;

$R^{11}$ et $R^{22}$ sont identiques ou différents et sont choisis parmi —R, —$R^1$,

$$-R^9-\overset{O}{\overset{\|}{C}}-R^8,\quad -R^9-O-R^{12},\quad -R^9-\overset{O}{\overset{\|}{C}}-O-R^{12};\quad -R^9-O-\overset{O}{\overset{\|}{C}}-R^8,\quad -\overset{O=\overset{R^{21}}{\overset{|}{C}}}{\overset{|}{CH}}-\overset{O}{\overset{\|}{C}}-R^{13},$$

$$-R^9-CN,\ -O-\overset{O}{\overset{\|}{C}}-R^8,\quad -O-R^{12}$$

où R, $R^1$, $R^8$, $R^9$, $R^{12}$, $R^{13}$ sont tels que précédemment définis; et

g = 0, 1, 2 or 3, r = 0, 1, 2 ou 3 et h = 1, 2, 3 ou 4 pourvu que g + r + h = 4.

Tous les pourcentages étant en poids par rapport au poids total de la composition stabilisatrice, pourvu que lorsque le pourcentage en poids du composé étain contenant de l'halogène (C) est O alors au moins l'un des composés organo-étain du constituant (A) est choisi parmi les composés répondant aux formules générales (II), (IV) ou (V), dans lesquelles au moins un X ou $X^1$ est Cl, Br ou I, et que la composition contienne au moins 0,1% en poids d'halogène dans les composés étain contenant de l'halogène du groupe (A) et/ou du groupe (C).

2. Composition selon la revendication 1, caractérisée en outre par le fait que dans la formule générale (I) R est un groupe méthyle, butyle ou octyle et W est du soufre.

3. Composition selon la revendication 1, caractérisée en outre par le fait que dans la formule générale (II) $R^1$ est un groupe méthyle ou butyle, W est

$$-R^3O\overset{\overset{\displaystyle O}{\|}}{C}R^8,$$

m = 1 et t − 1.

4. Composition selon la revendication 1, caracterisée en outre par la fait que dans la formule générale (IIa) R et $R^1$ sont un groupe méthyle, butyle, octyle ou

$$-R^9-C-\overset{\overset{\displaystyle O}{\|}}{O}-R^{12},$$

W et $W^1$ sont de l'oxygène ou du soufre; et Z est

$$-S-R^3-O-\overset{\overset{\displaystyle O}{\|}}{C}-R^6-\overset{\overset{\displaystyle O}{\|}}{C}-O-R^3-S-,\quad -S-R^3-O-\overset{\overset{\displaystyle O}{\|}}{C}-R^4-S-\ \text{ou}$$

$$-S-R^4-\overset{\overset{\displaystyle O}{\|}}{C}-O-R^5-O-\overset{\overset{\displaystyle O}{\|}}{C}-R^4-S-.$$

5. Composition selon la revendication 1, caracterisée outre par le fait que dans la formule générale (III) R est un groupe méthyle ou butyle, $R^1$ est un groupe méthyle ou butyle, X est $-SR^2$ où $R^2$ est

$$-R^3O\overset{\overset{\displaystyle O}{\|}}{C}R^8,$$

$X^1$ est $SR^2$ où $R^2$ est

$$-R^3O\overset{\overset{\displaystyle O}{\|}}{C}R^8,$$

n = 0 ou 1, n' = 0 ou 1, n + n' = 1 et p = 2.

6. Composition selon la revendication 1, caractérisée en outre par le fait que dans la formule générale (IV) R est du méthyle, X est $-SR^2$ où $R^2$ est

$$-R^3O\overset{\overset{\displaystyle O}{\|}}{C}R^8,$$

$R^1$ est du méthyle, $X^1$ est $-SR^2$ où $R^2$ est

$$-R^3O\overset{\overset{\displaystyle O}{\|}}{C}R^8,$$

Y est —S—, a = 0, b = 2, c = 1, d = 2 et q = 1.

7. Composition selon la revendication 1, caractérisé en outre par le fait que dans la formule générale (V) R est du méthyle, $R^1$ est du méthyle, Y est —S—, w = 1, x = 1, y = 1 et z = 0.

8. Composition selon la revendication 1, caractérisée en outre par le fait que dans la formule générale (VI) $R^{14}$ est —H, $R^{24}$ est —H, $R^{15}$ est

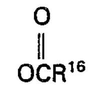

et i = 1.

9. Composition selon la revendication 1, caractérisée en outre par le fait que dans la formule générale (VII) $R^{10}$ est du phényle, $R^{14}$ est —H, $R^{23}$ est —H, $R^{19}$ est —H, i = 1 et j = 1.

10. Composition selon la revendication 1, caractérisée en outre par le fait que dans la formule générale (VIII) $R^{14}$ est —H, $R^{17}$ est

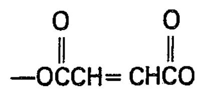

et i = 1.

11. Composition selon la revendication 1, caractérisée en outre par le fait que dans la formule générale (IX) $R^{14}$ est —H et i = 1.

12. Composition selon la revendication 1, caractérisée en outre par le fait que dans la formule générale (X) $R^{20}$ est $—C_2H_5$ ou

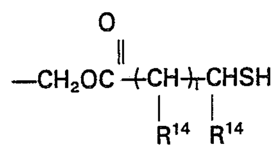

$R^{14}$ est —H et i = 1.

13. Composition selon la revendication 1, caractérisée en outre par le fait que dans la formule générale (XI) $R^{14}$ est —H et i = 1.

14. Composition selon la revendication 1, caractérisée en outre par le fait que dans la formule générale (XIa) $R^{200}$ est $—CH_2CH_2—$ ou

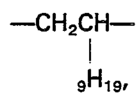 et $R^{201}$ est $—CH_2—$ ou 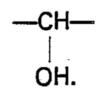

15. Composition selon l'une quelconque des revendications 2 à 7, caractérisée en outre par le fait que le composé organique contenant du mercaptan ou le mélange de composés organiques contenant du mercaptan répond à la formule générale (VI).

16. Composition selon la revendication 15, caractérisée en outre par le fait que dans la formule générale (VI) $R^{14}$ est —H, $R^{24}$ est —H, $R^{15}$ est

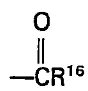 et i = 1.

17. Composition selon l'une quelconque des revendications précédentes, caractérisée en outre par le fait que le pourcentage pondéral de composé étain renfermant de l'halogène (C) est 0.

18. Composition selon l'une quelconque des revendications 1 à 16, caractérisée en outre par le fait que le pourcentage pondéral du composé étain contenant de l'halogène ou du mélange de composés étain contenant de l'halogène selon la formule (XII) est 0,1% à 15.

19. Composition selon la revendication 18, caractérisée en outre par le fait que dans la formule (XII) $R^{11}$ est du méthyle, $R^{22}$ est —Cl, Q est Cl, g = 1, h = 2 et r = 1.

20. Composition selon l'une quelconque des revendications 17 à 19, caractérisée en outre par le fait que le composé organique contenant du mercaptan ou le mélange de composés organiques contenant du mercaptan (B) est selon la formule générale (VI).

21. Composition polymère stabilisée contre les effets de détérioration thermique comprenant un polymère organique contanant de l'halogène et caractérisé par le fait qu'il contient une quantité stabilisante de la composition selon l'une quelconque des revendications 1 à 20.

22. Procédé pour stabiliser un polymère organique contenant de l'halogène contre les effets de détérioration thermique, caractérisé par le fait qu'il consiste à mélanger ce polymère avec une quantité stabilisante de la composition selon l'pune quelconque des revendications 1 à 20.

23. Article conformé de fabrication telle qu'un tuyau comportant un polymère organique contenant de l'halogène et caractérisé per le fait qu'il contient une quantité stabilisante de la composition selon l'une quelconque des revendications 1 à 20.

24. Composition selon l'une quelconque des revendications 1 à 20, caractérisée en outre par le fait que le pourcentage pondéral de l'halogène dans la composition stabilisante est de 0,5% à 2%, par rapport au poids total de la composition.